(19) 

Europäisches Patentamt
European Patent Office
Office européen des brevets

(11) **EP 4 243 515 B1**

(12) **EUROPEAN PATENT SPECIFICATION**

(45) Date of publication and mention
of the grant of the patent:
**12.02.2025 Bulletin 2025/07**

(21) Application number: **20963073.0**

(22) Date of filing: **30.11.2020**

(51) International Patent Classification (IPC):
*H04W 52/04* (2009.01)        *H04W 52/24* (2009.01)
*H04W 52/34* (2009.01)        *H04W 52/42* (2009.01)

(52) Cooperative Patent Classification (CPC):
**H04W 52/42; H04W 52/241; H04W 52/346;**
H04W 52/245

(86) International application number:
**PCT/CN2020/132882**

(87) International publication number:
**WO 2022/110185 (02.06.2022 Gazette 2022/22)**

(54) **POWER CONTROL METHOD, COMMUNICATION DEVICE, AND SYSTEM**

LEISTUNGSSTEUERUNGSVERFAHREN, KOMMUNIKATIONSVORRICHTUNG UND SYSTEM

PROCÉDÉ DE COMMANDE DE PUISSANCE, DISPOSITIF DE COMMUNICATION ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.09.2023 Bulletin 2023/37**

(73) Proprietor: **Huawei Technologies Co., Ltd.
Shenzhen, Guangdong 518129 (CN)**

(72) Inventors:
• **RUAN, Wei
  Shenzhen, Guangdong 518129 (CN)**
• **CHEN, Cong
  Shenzhen, Guangdong 518129 (CN)**
• **LIU, Jinghui
  Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A1-2019/185428        WO-A1-2019/185430
CN-A- 101 411 110        CN-A- 104 980 942
US-A1- 2004 042 439**

• **GAELEN PEREIRA ET AL: "Increasing Network
Area Spectral Efficiency by combining multiple
PHY techniques", MILITARY COMMUNICATIONS
CONFERENCE, 2012 - MILCOM 2012, IEEE, 29
October 2012 (2012-10-29), pages 1 - 6,
XP032315461, ISBN: 978-1-4673-1729-0, DOI:
10.1109/MILCOM.2012.6415649**

## Description

### TECHNICAL FIELD

This application relates to the field of wireless communication technologies, and in particular, to a power control method, and a communication device and system.

### BACKGROUND

With the popularity of wireless local area network (wireless local area network, WLAN) technologies and intelligent terminals, more people get used to using smartphones and tablet computers to work.

Wi-Fi, also referred to as a "wireless hotspot" or "wireless network", is a WLAN technology based on the next-generation institute of electrical and electronics engineers (institute of electrical and electronics engineers, IEEE) 802.11 standard, and has become the first choice for more users to access the Internet and is gradually replacing wired access. To adapt to new service applications and reduce a gap with a wired network bandwidth, in six generations of Wi-Fi systems (which include 802.11, 802.11b, 802.11a/g, 802.11n, 802.11ac, and 802.11ax) that have been developed and popularized, each generation of IEEE 802.11 standard proposes a plurality of communication technologies to improve a rate and spectrum utilization, for example, an orthogonal frequency division multiplexing (orthogonal frequency division multiplexing, OFDM) technology, a multiple-input multiple-output (multiple-input multiple-output, MIMO) technology, and a beamforming (transmit beamforming, TxBF) channel detection mechanism.

However, performance of a wireless communication system is greatly affected by a wireless channel. For example, due to shadow fading and frequency selective fading, a propagation path between a transmitter and a receiver is very complex. Unlike wired channels, wireless channels are not fixed and predictable, but have great randomness, which poses great challenges to a design of the receiver. To accurately demodulate a transmit signal from the transmitter in the receiver, people take various measures to ensure a demodulation capability of the receiver.

US 2004/042439 A1 discloses a method to perform beam-steering and beam-forming to transmit data on a single eigenmode in a wideband multiple-input channel. In one method, a steering vector is obtained for each of a number of subbands. Depending on how the steering vectors are defined, beam-steering or beam-forming can be achieved for each subband. The total transmit power is allocated to the subbands based on a particular power allocation scheme (e.g., full channel inversion, selective channel inversion, water-filling, or uniform). A scaling value is then obtained for each subband based on its allocated transmit power. Data to be transmitted is coded and modulated to provide modulation symbols. The modulation symbols to be transmitted on each subband are scaled with the subband's scaling value and further preconditioned with the subband's steering vector. A stream of preconditioned symbols is then formed for each transmit antenna.

### SUMMARY

This application provides a power control method, and a communication device and system, to help control power based on a subband granularity in a communication system, so as to ensure a demodulation capability of a receiver.

The invention is defined in the appended set of claims. According to a first aspect, an embodiment of this application provides a power control method. The method may be applied to a first communication apparatus that supports transmission of a plurality of spatial streams, and the first communication apparatus may be a signal transmit end in a communication system. The method may include: sending measurement indication information to a second communication apparatus, to indicate the second communication apparatus to perform channel quality measurement on a channel between the first communication apparatus and the second communication apparatus, where each of the plurality of spatial streams occupies a plurality of subbands on the channel; receiving a channel quality measurement result fed back by the second communication apparatus, where the channel quality measurement result includes subband measurement information of each subband on the channel; and selectively performing, based on the subband measurement information, power water filling on subbands occupied by the plurality of spatial streams.

According to this solution, in a scenario in which channel quality measurement may be performed, the first communication apparatus can indicate the second communication apparatus at a peer end to measure a channel status between the first communication apparatus and the second communication apparatus, to obtain measurement information based on a subband granularity, so as to selectively implement, based on the subband granularity, power control on some subbands (for example, some subbands with strong received signal strength) occupied by each spatial stream. Therefore, for example, during near strong field communication, power of a strong subband is appropriately reduced, so that when receiving a transmit signal of the first communication apparatus and performing automatic gain control (automatic gain control, AGC), the second communication apparatus at the peer end increases a low noise amplifier (low noise amplifier, LNA) range, to reduce a noise factor of the second communication apparatus, increase a received signal-to-noise ratio of a weak subband, and enhance a demodulation capability of the second communication apparatus.

It may be understood that in the power control solution, a processing process in which the first communication apparatus selectively performs power water filling on the subbands occupied by the plurality of spatial streams may be implemented in an entire processing process or in a partial processing process in which the first communication apparatus transmits a signal to the second communication apparatus. This is not limited in this application. TxBF is used as an example. For example, in a precoding processing process, the first communication apparatus can selectively perform, based on the subband measurement information, power water filling on the subbands occupied by the plurality of spatial streams. Herein, a first power value represents power that is of a target subband on which the power water filling needs to be performed and that is inputted into a precoding processing module, and a second power value represents power that is of the target subband and that is outputted from the precoding processing module. Through the power water filling, the second power value is less than the first power value. If a signal obtained through frequency domain precoding power adjustment is converted to time domain through OFDM modulation, antenna power normalization, for example, maximum antenna power normalization or total antenna power normalization, further needs to be performed on the signal. A power change caused by the normalization processing process is not temporarily considered in the scope of this application.

In a possible implementation, the subband measurement information of each subband includes corresponding subband average signal-to-noise ratio information when each spatial stream occupies the subband; and the selectively performing, based on the subband measurement information, power water filling on subbands occupied by the plurality of spatial streams includes: selectively performing, based on the subband average signal-to-noise ratio information, power water filling on the subbands occupied by the plurality of spatial streams.

According to this solution, power control on some subbands occupied by each spatial stream can be selectively implemented by measuring and obtaining a measurement result, for example, subband average signal-to-noise ratio information, of a parameter that is closely correlated to demodulation performance of a receiver.

In a possible implementation, the selectively performing, based on the subband average signal-to-noise ratio information, power water filling on the subbands occupied by the plurality of spatial streams includes: determining, based on the subband average signal-to-noise ratio information, a power adjustment value of each subband occupied by each spatial stream; for each subband occupied by each spatial stream, when the power adjustment value of the subband meets a preset adjustment condition, selecting the subband as a target subband on which the power water filling needs to be performed in the spatial stream; and performing power water filling on the target subband based on a target power adjustment value of the target subband.

According to this solution, feasibility analysis can be performed on power adjustment values of the subbands occupied by the plurality of spatial streams, and a target subband on which power water filling processing can be performed is selected from the subbands. Therefore, in a scenario in which a large bandwidth and a plurality of spatial streams are supported, power of some subbands is adjusted, so that a difference of signal strength of each spatial stream received by the second communication apparatus at different locations in a bandwidth is reduced, and a problem that demodulation is difficult caused by obvious signal fading at some frequencies due to frequency selectivity caused by a multipath channel is avoided as much as possible.

In a possible implementation, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

According to this solution, the second communication apparatus can feed back a subband average signal-to-noise ratio or a signal-to-noise ratio difference to the first communication apparatus, so that the first communication apparatus obtains a corresponding water filling value, and selectively implements power water filling on the subbands occupied by the plurality of spatial streams.

In a possible implementation, for each subband occupied by each spatial stream, the power adjustment value of the subband is a difference between the subband average signal-to-noise ratio of the subband and a specified parameter value, where the specified parameter value is a sum of a minimum value of subband average signal-to-noise ratios of the subbands occupied by the plurality of spatial streams and a preset constant value, and the preset constant value is an empirical value or a simulated value obtained based on a condition number; and the adjustment condition includes: The power adjustment value of the subband is greater than 0.

According to this solution, a related algorithm can be configured on a first communication apparatus side, so that the first communication apparatus obtains a water filling value of each subband based on information fed back by the second communication apparatus.

In a possible implementation, a target power adjustment value of each target subband is less than or equal to an adjustment threshold, and the adjustment threshold is an upper limit of a power adjustment value of a subband, where the channel quality measurement result further includes: the adjustment threshold; or a maximum received signal strength RSSI, where the maximum RSSI is a power value of an antenna that is of the second communication apparatus and that has a maximum RSSI, and the adjustment threshold is a difference between the maximum RSSI and a preset RSSI threshold.

According to this solution, adverse impact on a demodulation effect caused by reduction of power of some subbands is avoided as much as possible through an upper limit of a power adjustment value.

In a possible implementation, the RSSI threshold is an RSSI corresponding to an error vector magnitude EVM inflection point of the second communication apparatus, where the RSSI corresponding to the EVM inflection point of the second communication apparatus is obtained by the first communication apparatus through estimation; or the channel quality measurement result further includes the RSSI corresponding to the EVM inflection point of the second communication apparatus.

According to this solution, an upper limit of a power adjustment value corresponding to each subband is limited based on a difference between maximum received signal strength and received signal strength corresponding to an EVM inflection point. When power water filling is performed on some subbands to enhance the demodulation capability of the second communication apparatus, it can be ensured that demodulation quality of the second receiving apparatus falls within an acceptable deterioration range, and a problem of severe demodulation quality reduction caused by power reduction of some subbands is avoided as much as possible.

In a possible implementation, the subband measurement information of each subband includes a corresponding power adjustment value when each spatial stream occupies the subband, a target power adjustment value of a target subband that is selected by the second communication apparatus and on which the power water filling needs to be performed in the spatial stream is greater than 0, and a power adjustment value of a subband other than the target subband is equal to 0; and the selectively performing, based on the subband measurement information, power water filling on subbands occupied by the plurality of spatial streams includes: performing power water filling on the target subband based on the target power adjustment value of the target subband.

According to this solution, the second communication apparatus can directly feed back a power adjustment value corresponding to each subband to the first communication apparatus, to indicate the first communication apparatus to selectively perform power water filling on the subbands occupied by the plurality of spatial streams.

In a possible implementation, the channel quality measurement result further includes a stream average signal-to-noise ratio estimated value of each spatial stream, and the stream average signal-to-noise ratio estimated value is a corresponding stream average signal-to-noise ratio that is estimated by the second communication apparatus and that is obtained after the first communication apparatus performs power water filling on the target subband based on the target power adjustment value; and the method further includes: performing modulation and coding scheme MCS scheduling based on the stream average signal-to-noise ratio estimated value, to improve a peak throughput in a near strong field in the scenario of a large bandwidth and a plurality of spatial streams.

In a possible implementation, a first power value of the target subband before the power water filling is greater than a second power value of the target subband after the power water filling. Therefore, power of some strong subbands is reduced.

In a possible implementation, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier; and the selectively performing, based on the subband measurement information, power water filling on subbands occupied by the plurality of spatial streams includes: selectively performing, during precoding processing based on the subband measurement information and the weighting vector of the subcarrier, power water filling on the subbands occupied by the plurality of spatial streams.

According to this solution, in a transceiver that supports a TxBF mechanism, in a precoding processing process, power water filling is selectively performed on the subbands occupied by the plurality of spatial streams, to reduce the power of some strong subbands, so as to improve the peak throughput in the near strong field in the scenario of a large bandwidth and a plurality of spatial streams.

In a possible implementation, the measurement indication information is located in a high efficient signaling field in the measurement frame; and the measurement indication information further indicates different subband widths by setting different values in corresponding bits of the high efficient signaling field.

According to this solution, in a TxBF scenario, measurement indication information and a subband width may be carried in a measurement frame (for example, an NDP frame), to notify the second communication apparatus at the peer end to start corresponding measurement, so as to selectively perform power water filling on the subbands occupied by the plurality of spatial streams.

According to a second aspect, an embodiment of this application provides a power control method. The method may be applied to a second communication apparatus that supports transmission of a plurality of spatial streams, and the second communication apparatus may be a signal receive end in a communication system. The method may include: receiving measurement indication information from a first communication apparatus; performing channel quality measurement on a channel between the first communication apparatus and the second communication apparatus based on the measurement indication information, to obtain subband measurement information of each subband on the channel, where each of the plurality of spatial streams occupies a plurality of subbands on the channel; and sending a channel quality measurement result to the first communication apparatus, where the channel quality measurement result includes the subband measurement information, and the subband measurement information is used to enable the first communication apparatus to selectively perform power water filling on subbands occupied by the plurality of spatial streams.

In a possible implementation, the subband measurement information of each subband includes corresponding subband average signal-to-noise ratio information when each spatial stream occupies the subband.

In a possible implementation, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible implementation, the channel quality measurement result further includes: an adjustment threshold, where the adjustment threshold is an upper limit of a power adjustment value of a subband; or a maximum received signal strength RSSI, where the maximum RSSI is a power value of an antenna that is of the second communication apparatus and that has a maximum RSSI, and the maximum RSSI is used to determine an adjustment threshold.

In a possible implementation, the channel quality measurement result further includes an RSSI corresponding to an error vector magnitude EVM inflection point of the second communication apparatus.

In a possible implementation, the subband measurement information of each subband includes a corresponding power adjustment value when each spatial stream occupies the subband, a target power adjustment value of a target subband that is selected by the second communication apparatus and on which the power water filling needs to be performed in the spatial stream is greater than 0 and less than or equal to an adjustment threshold, and a power adjustment value of a subband other than the target subband is equal to 0.

In a possible implementation, when the second communication apparatus obtains the subband measurement information of each subband on the channel, the method includes: performing channel quality measurement on the channel based on the measurement indication information, to obtain corresponding subband average signal-to-noise ratio information when each spatial stream occupies each subband; determining, based on the subband average signal-to-noise ratio information, a power adjustment value of each subband occupied by each spatial stream, where for each subband occupied by each spatial stream, the power adjustment value of the subband is a difference between a subband average signal-to-noise ratio of the subband and a specified parameter value, the specified parameter value is a sum of a minimum value of subband average signal-to-noise ratios of the subbands occupied by the plurality of spatial streams and a preset constant value, and the preset constant value is an empirical value or a simulated value obtained based on a condition number; and for each subband occupied by each spatial stream, when the power adjustment value of the subband meets a preset adjustment condition, selecting the subband as a target subband on which the power water filling needs to be performed in the spatial stream, where the adjustment condition includes: The power adjustment value of the subband is greater than 0.

In a possible implementation, the channel quality measurement result further includes a stream average signal-to-noise ratio estimated value of each spatial stream, and the stream average signal-to-noise ratio estimated value is used for the first communication apparatus to perform modulation and coding scheme MCS scheduling; and the stream average signal-to-noise ratio estimated value is a corresponding stream average signal-to-noise ratio that is estimated by the second communication apparatus and that is obtained after the first communication apparatus performs power water filling on the target subband based on the target power adjustment value.

In a possible implementation, a first power value of the target subband before the power water filling is greater than a second power value of the target subband after the power water filling.

In a possible implementation, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier.

In a possible implementation, the measurement indication information is located in a high efficient signaling field in the measurement frame; and the measurement indication information further indicates different subband widths by setting different values in corresponding bits of the high efficient signaling field.

According to a third aspect, an embodiment of this application provides a communication apparatus. The communication apparatus may support transmission of a plurality of spatial streams. The communication apparatus may be a transmit end in a communication system, and may be implemented as a network device or a terminal device. The communication apparatus may include: a transceiver unit, configured to send measurement indication information to a second communication apparatus, and receive a channel quality measurement result fed back by the second communication apparatus, where the measurement indication information indicates the second communication apparatus to perform channel quality measurement on a channel between the communication device and the second communication apparatus, and each of the plurality of spatial streams occupies a plurality of subbands on the channel; and the channel quality measurement result includes subband measurement information of each subband on the channel; and a processing unit, configured to selectively perform, based on the subband measurement information, power water filling on subbands occupied by the plurality of spatial streams.

In a possible design, the subband measurement information of each subband includes corresponding subband average signal-to-noise ratio information when each spatial stream occupies the subband; and the processing unit is configured to: selectively perform, based on the subband average signal-to-noise ratio information, power water filling on the subbands occupied by the plurality of spatial streams.

In a possible design, the processing unit is configured to: determine, based on the subband average signal-to-noise ratio information, a power adjustment value of each subband occupied by each spatial stream; for each subband occupied by each spatial stream, when the power adjustment value of the subband meets a preset adjustment condition, select the subband as a target subband on which the power water filling needs to be performed in the spatial stream; and perform power water filling on the target subband based on a target power adjustment value of the target subband.

In a possible design, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible design, for each subband occupied by each spatial stream, the power adjustment value of the subband is a difference between the subband average signal-to-noise ratio of the subband and a specified parameter value, where the specified parameter value is a sum of a minimum value of subband average signal-to-noise ratios of the subbands occupied by the plurality of spatial streams and a preset constant value, and the preset constant value is an empirical value or a simulated value obtained based on a condition number; and the adjustment condition includes: The power adjustment value of the subband is greater than 0.

In a possible design, a target power adjustment value of each target subband is less than or equal to an adjustment threshold, and the adjustment threshold is an upper limit of a power adjustment value of a subband, where the channel quality measurement result further includes: the adjustment threshold; or a maximum received signal strength RSSI, where the maximum RSSI is a power value of an antenna that is of the second communication apparatus and that has a maximum RSSI, and the adjustment threshold is a difference between the maximum RSSI and a preset RSSI threshold.

In a possible design, the RSSI threshold is an RSSI corresponding to an error vector magnitude EVM inflection point of the second communication apparatus, where the RSSI corresponding to the EVM inflection point of the second communication apparatus is obtained by the first communication apparatus through estimation; or the channel quality measurement result further includes the RSSI corresponding to the EVM inflection point of the second communication apparatus.

In a possible design, the subband measurement information of each subband includes a corresponding power adjustment value when each spatial stream occupies the subband, a target power adjustment value of a target subband that is selected by the second communication apparatus and on which the power water filling needs to be performed in the spatial stream is greater than 0, and a power adjustment value of a subband other than the target subband is equal to 0; and the processing unit is configured to: perform power water filling on the target subband based on the target power adjustment value of the target subband.

In a possible design, the channel quality measurement result further includes a stream average signal-to-noise ratio estimated value of each spatial stream, and the stream average signal-to-noise ratio estimated value is a corresponding stream average signal-to-noise ratio that is estimated by the second communication apparatus and that is obtained after the first communication apparatus performs power water filling on the target subband based on the target power adjustment value; and the processing unit is further configured to: perform modulation and coding scheme MCS scheduling based on the stream average signal-to-noise ratio estimated value.

In a possible design, a first power value of the target subband before the power water filling is greater than a second power value of the target subband after the power water filling.

In a possible design, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality

# EP 4 243 515 B1

measurement result is carried in a response frame fed back by the second communication apparatus in response to the measurement frame, and the channel quality measurement result further includes a weighting vector of a subcarrier; and the processing unit is configured to: selectively perform, during precoding processing based on the subband measurement information and the weighting vector of the subcarrier, power water filling on the subbands occupied by the plurality of spatial streams.

In a possible design, the measurement indication information is located in a high efficient signaling field in the measurement frame; and the measurement indication information further indicates different subband widths by setting different values in corresponding bits of the high efficient signaling field.

According to a fourth aspect, an embodiment of this application provides a communication apparatus. The communication apparatus may support transmission of a plurality of spatial streams. The communication apparatus may be a transmit end in a communication system, and may be implemented as a network device or a terminal device. The communication apparatus may include: a transceiver unit, configured to receive measurement indication information from a first communication apparatus; and a processing unit, configured to perform channel quality measurement on a channel between the first communication apparatus and the communication device based on the measurement indication information, to obtain subband measurement information of each subband on the channel, where each of the plurality of spatial streams occupies a plurality of subbands on the channel, where the transceiver unit is further configured to send a channel quality measurement result to the first communication apparatus, where the channel quality measurement result includes the subband measurement information, and the subband measurement information is used to enable the first communication apparatus to selectively perform power water filling on subbands occupied by the plurality of spatial streams.

In a possible design, the subband measurement information of each subband includes corresponding subband average signal-to-noise ratio information when each spatial stream occupies the subband.

In a possible design, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible design, the channel quality measurement result further includes: an adjustment threshold, where the adjustment threshold is an upper limit of a power adjustment value of a subband; or a maximum received signal strength RSSI, where the maximum RSSI is a power value of an antenna that is of the second communication apparatus and that has a maximum RSSI, and the maximum RSSI is used to determine an adjustment threshold.

In a possible design, the channel quality measurement result further includes an RSSI corresponding to an error vector magnitude EVM inflection point of the second communication apparatus.

In a possible design, the subband measurement information of each subband included in the channel quality measurement result includes a corresponding power adjustment value when each spatial stream occupies the subband, a target power adjustment value of a target subband that is selected by the second communication apparatus and on which the power water filling needs to be performed in the spatial stream is greater than 0 and less than or equal to an adjustment threshold, and a power adjustment value of a subband other than the target subband is equal to 0.

In a possible design, the subband measurement information of each subband obtained through measurement includes corresponding subband average signal-to-noise ratio information when each spatial stream occupies the subband; and the processing unit is further configured to: determine, based on the subband average signal-to-noise ratio information, a power adjustment value of each subband occupied by each spatial stream, where for each subband occupied by each spatial stream, the power adjustment value of the subband is a difference between a subband average signal-to-noise ratio of the subband and a specified parameter value, the specified parameter value is a sum of a minimum value of subband average signal-to-noise ratios of the subbands occupied by the plurality of spatial streams and a preset constant value, and the preset constant value is an empirical value or a simulated value obtained based on a condition number; and for each subband occupied by each spatial stream, when the power adjustment value of the subband meets a preset adjustment condition, select the subband as a target subband on which the power water filling needs to be performed in the spatial stream, where the adjustment condition includes: The power adjustment value of the subband is greater than 0.

In a possible design, the channel quality measurement result further includes a stream average signal-to-noise ratio estimated value of each spatial stream, and the stream average signal-to-noise ratio estimated value is used for the first communication apparatus to perform modulation and coding scheme MCS scheduling; and the stream average signal-to-noise ratio estimated value is a corresponding stream average signal-to-noise ratio that is estimated by the second communication apparatus and that is obtained after the first communication apparatus performs power water filling on the target subband based on the target power adjustment value.

In a possible design, a first power value of the target subband before the power water filling is greater than a second power value of the target subband after the power water filling.

7

In a possible design, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier.

In a possible design, the measurement indication information is located in a high efficient signaling field in the measurement frame; and the measurement indication information further indicates different subband widths by setting different values in corresponding bits of the high efficient signaling field.

According to a fifth aspect, an embodiment of this application provides a communication device. The communication device may support transmission of a plurality of spatial streams. The communication device may be a transmit end in a communication system, and may be implemented as a network device or a terminal device. The communication device may include: a transceiver, configured to send measurement indication information to a second communication apparatus, and receive a channel quality measurement result fed back by the second communication apparatus, where the measurement indication information indicates the second communication apparatus to perform channel quality measurement on a channel between the communication device and the second communication apparatus, and each of the plurality of spatial streams occupies a plurality of subbands on the channel; and the channel quality measurement result includes subband measurement information of each subband on the channel; and a processor, coupled to the transceiver and configured to selectively perform, based on the subband measurement information, power water filling on subbands occupied by the plurality of spatial streams.

In a possible implementation, the subband measurement information of each subband includes corresponding subband average signal-to-noise ratio information when each spatial stream occupies the subband; and the processor is configured to: selectively perform, based on the subband average signal-to-noise ratio information, power water filling on the subbands occupied by the plurality of spatial streams.

In a possible implementation, the processor is configured to: determine, based on the subband average signal-to-noise ratio information, a power adjustment value of each subband occupied by each spatial stream; for each subband occupied by each spatial stream, when the power adjustment value of the subband meets a preset adjustment condition, select the subband as a target subband on which the power water filling needs to be performed in the spatial stream; and perform power water filling on the target subband based on a target power adjustment value of the target subband.

In a possible implementation, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible implementation, for each subband occupied by each spatial stream, the power adjustment value of the subband is a difference between the subband average signal-to-noise ratio of the subband and a specified parameter value, where the specified parameter value is a sum of a minimum value of subband average signal-to-noise ratios of the subbands occupied by the plurality of spatial streams and a preset constant value, and the preset constant value is an empirical value or a simulated value obtained based on a condition number; and the adjustment condition includes: The power adjustment value of the subband is greater than 0.

In a possible implementation, a target power adjustment value of each target subband is less than or equal to an adjustment threshold, and the adjustment threshold is an upper limit of a power adjustment value of a subband, where the channel quality measurement result further includes: the adjustment threshold; or a maximum received signal strength RSSI, where the maximum RSSI is a power value of an antenna that is of the second communication apparatus and that has a maximum RSSI, and the adjustment threshold is a difference between the maximum RSSI and a preset RSSI threshold.

In a possible implementation, the RSSI threshold is an RSSI corresponding to an error vector magnitude EVM inflection point of the second communication apparatus, where the RSSI corresponding to the EVM inflection point of the second communication apparatus is obtained by the first communication apparatus through estimation; or the channel quality measurement result further includes the RSSI corresponding to the EVM inflection point of the second communication apparatus.

In a possible implementation, the subband measurement information of each subband includes a corresponding power adjustment value when each spatial stream occupies the subband, a target power adjustment value of a target subband that is selected by the second communication apparatus and on which the power water filling needs to be performed in the spatial stream is greater than 0, and a power adjustment value of a subband other than the target subband is equal to 0; and the processor is configured to: perform power water filling on the target subband based on the target power adjustment value of the target subband.

In a possible design, the channel quality measurement result further includes a stream average signal-to-noise ratio estimated value of each spatial stream, and the stream average signal-to-noise ratio estimated value is a corresponding stream average signal-to-noise ratio that is estimated by the second communication apparatus and that is obtained after the first communication apparatus performs power water filling on the target subband based on the target power adjustment value; and the processor is further configured to: perform modulation and coding scheme MCS scheduling based on the stream average signal-to-noise ratio estimated value.

In a possible implementation, a first power value of the target subband before the power water filling is greater than a second power value of the target subband after the power water filling.

In a possible implementation, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier; and the processor is configured to: selectively perform, during precoding processing based on the subband measurement information and the weighting vector of the subcarrier, power water filling on the subbands occupied by the plurality of spatial streams.

In a possible implementation, the measurement indication information is located in a high efficient signaling field in the measurement frame; and the measurement indication information further indicates different subband widths by setting different values in corresponding bits of the high efficient signaling field.

According to a sixth aspect, an embodiment of this application provides a communication device. The communication device may support transmission of a plurality of spatial streams. The communication device may be a receive end in a communication system, and may be implemented as a network device or a terminal device. The communication device may include: a transceiver, configured to receive measurement indication information from a first communication apparatus; and a processor, coupled to the transceiver and configured to perform channel quality measurement on a channel between the first communication apparatus and the communication device based on the measurement indication information, to obtain subband measurement information of each subband on the channel, where each of the plurality of spatial streams occupies a plurality of subbands on the channel, where the transceiver is further configured to send a channel quality measurement result to the first communication apparatus, where the channel quality measurement result includes the subband measurement information, and the subband measurement information is used to enable the first communication apparatus to selectively perform power water filling on subbands occupied by the plurality of spatial streams.

In a possible implementation, the subband measurement information of each subband includes corresponding subband average signal-to-noise ratio information when each spatial stream occupies the subband.

In a possible implementation, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible implementation, the channel quality measurement result further includes: an adjustment threshold, where the adjustment threshold is an upper limit of a power adjustment value of a subband; or a maximum received signal strength RSSI, where the maximum RSSI is a power value of an antenna that is of the second communication apparatus and that has a maximum RSSI, and the maximum RSSI is used to determine an adjustment threshold.

In a possible implementation, the channel quality measurement result further includes an RSSI corresponding to an error vector magnitude EVM inflection point of the second communication apparatus.

In a possible implementation, the subband measurement information of each subband includes a corresponding power adjustment value when each spatial stream occupies the subband, a target power adjustment value of a target subband that is selected by the second communication apparatus and on which the power water filling needs to be performed in the spatial stream is greater than 0 and less than or equal to an adjustment threshold, and a power adjustment value of a subband other than the target subband is equal to 0.

In a possible implementation, when obtaining the subband measurement information of each subband on the channel, the processor is configured to: perform channel quality measurement on the channel based on the measurement indication information, to obtain corresponding subband average signal-to-noise ratio information when each spatial stream occupies each subband; determine, based on the subband average signal-to-noise ratio information, a power adjustment value of each subband occupied by each spatial stream, where for each subband occupied by each spatial stream, the power adjustment value of the subband is a difference between a subband average signal-to-noise ratio of the subband and a specified parameter value, the specified parameter value is a sum of a minimum value of subband average signal-to-noise ratios of the subbands occupied by the plurality of spatial streams and a preset constant value, and the preset constant value is an empirical value or a simulated value obtained based on a condition number; and for each subband occupied by each spatial stream, when the power adjustment value of the subband meets a preset adjustment condition, select the subband as a target subband on which the power water filling needs to be performed in the spatial stream, where the adjustment condition includes: The power adjustment value of the subband is greater than 0.

In a possible implementation, the channel quality measurement result further includes a stream average signal-to-noise ratio estimated value of each spatial stream, and the stream average signal-to-noise ratio estimated value is used for the first communication apparatus to perform modulation and coding scheme MCS scheduling; and the stream average signal-to-noise ratio estimated value is a corresponding stream average signal-to-noise ratio that is estimated by the second communication apparatus and that is obtained after the first communication apparatus performs power water filling on the target subband based on the target power adjustment value.

In a possible implementation, a first power value of the target subband before the power water filling is greater than a second power value of the target subband after the power water filling.

In a possible implementation, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier.

In a possible implementation, the measurement indication information is located in a high efficient signaling field in the measurement frame; and the measurement indication information further indicates different subband widths by setting different values in corresponding bits of the high efficient signaling field.

According to a seventh aspect, an embodiment of this application provides a communication system. The communication system may include the communication device according to either of the third aspect and the fourth aspect.

According to an eighth aspect, an embodiment of this application further provides a computer-readable storage medium. The computer-readable storage medium stores a computer program. When the computer program is run on a computer, the computer is enabled to perform the method provided in the first aspect or the second aspect.

According to a ninth aspect, an embodiment of this application further provides a computer program. When the computer program is run on a computer, the computer is enabled to perform the method provided in any one of the first aspect or the second aspect.

According to a tenth aspect, an embodiment of this application further provides a chip. The chip is configured to read a computer program stored in a memory, to perform the method provided in any one of the first aspect or the second aspect.

According to an eleventh aspect, an embodiment of this application further provides a chip system. The chip system includes a processor, configured to support a computer apparatus in implementing the method provided in either of the first aspect and the second aspect. In a possible design, the chip system further includes a memory. The memory is configured to store a program and data that are necessary for the computer apparatus. The chip system may include a chip, or may include a chip and another discrete component.

**BRIEF DESCRIPTION OF DRAWINGS**

FIG. 1 is a schematic diagram of a structure of a communication system according to an embodiment of this application;
FIG. 2 is a schematic flowchart of a power control method according to an embodiment of this application;
FIG. 3 is a schematic flowchart in a TxBF scenario according to an embodiment of this application;
FIG. 4 is a schematic diagram of a structure of an NDP frame according to an embodiment of this application;
FIG. 5 is a schematic diagram of a communication apparatus according to an embodiment of this application; and
FIG. 6 is a schematic diagram of a communication device according to an embodiment of this application.

**DESCRIPTION OF EMBODIMENTS**

Currently, in a plurality of communication technologies, for example, an OFDM technology is used. A frequency selective fading channel is converted into a plurality of orthogonal flat fading channels, to make full use of a bandwidth of a channel, so as to improve transmission efficiency of a communication system. Alternatively, a MIMO technology is used. A channel capacity of a communication system is significantly improved by using a plurality of transmit and receive antennas, and data transmission reliability is also enhanced. Alternatively, a TxBF channel detection mechanism is used. A beamforming TxBF transmit end (Beamformer, which is referred to as a transmit end for short subsequently) adjusts a related parameter based on a channel status between the transmit end and a beamforming receive end (Beamformee, which is referred to as a receive end for short subsequently) to adjust a transmission manner of a radio signal, to enable the radio signal to "aim at" a receive antenna at a peer end (that is, the receive end), so that the transmit signal is the strongest when the transmit signal arrives at the receive end, to improve a transmission success rate and a throughput of a radio link.

For a MIMO system in which an OFDM technology and a TxBF mechanism are used, data of transmit and receive antennas is divided into a plurality of independent spatial streams (spatial streams, that is, data streams transmitted through a transmit antenna) for sending, radio signals corresponding to a same spatial stream are transmitted through a plurality of paths, and each path may be considered as an independent transmission channel. In addition, the transmit end performs sub-spatial stream modulation processing based on a water filling mechanism, calculates a water filling value corresponding to each spatial stream based on a spatial stream average signal-to-noise ratio (average signal-to-noise ratio, ave SNR for short) fed back by the receive end, obtains an orthogonal precoding matrix based on the water filling value corresponding to each spatial stream and a weighting vector (or a V matrix) of a subcarrier fed back by the receive end, and then performs precoding processing on a transmit signal by using the obtained precoding matrix, to improve the transmission success rate and the throughput of the radio link.

However, in a Wi-Fi communication system that transmits a plurality of signals, a bandwidth that can be provided by a channel is generally wider than a bandwidth required for transmitting one signal. Due to frequency selectivity caused by a multipath channel, a difference of signal strength of each signal received by the receive end at different locations of a frequency band may be large. Fading at some frequencies is small, fading at some other frequencies is very obvious, and the frequencies are usually a bottleneck of demodulation, which may lead to failure of demodulation. When the transmit end performs sub-spatial stream modulation processing based on the spatial stream ave SNR fed back by the receive end, because the spatial stream ave SNR cannot reflect fluctuation of signal strength in a frequency band, an adjustment effect is affected, and a problem that demodulation is difficult due to obvious fading at some frequencies cannot be resolved. In some technologies, during near field communication, in an automatic gain control (automatic gain control, AGC) process, to avoid saturation of a low noise amplifier (low noise amplifier, LNA), an LNA range gain is reduced, and an amplitude of reduction mainly depends on a part with large frequency domain signal strength. However, as the LNA range is reduced (that is, a gain is reduced), a noise factor of the receive end is increased. Therefore, a signal-to-noise ratio of a frequency band part with small signal strength is reduced, and demodulation performance of the receive end is affected.

Therefore, in a scenario in which a large bandwidth and a plurality of spatial streams are supported, how to ensure a demodulation capability of a receive end is still one of problems that need to be urgently resolved.

In view of this, embodiments of this application provide a solution, to help control power based on a subband granularity in a communication system, to ensure the demodulation capability of the receiver. In this solution, the method and the apparatus are conceived based on a same technical concept. The method and the apparatus have similar principles for resolving the problem. Therefore, for implementation of the apparatus and the method, refer to each other, and details of repeated parts are not described.

The solution may be applied to a communication system that supports transmission of a plurality of spatial streams. The communication system may be a MIMO system in which a modulation and coding scheme of each spatial stream is the same. The communication system may include a first communication apparatus and a second communication apparatus. Each of the plurality of spatial streams occupies a plurality of subbands on a channel between the first communication apparatus and the second communication apparatus. The subbands may be obtained by dividing a bandwidth of the channel based on a predetermined subband width. The first communication apparatus may be used as a transmit end, and the second communication apparatus may be used as a receive end. The first communication apparatus can send measurement indication information to the second communication apparatus, to indicate the second communication apparatus to perform channel quality measurement on the channel between the first communication apparatus and the second communication apparatus. Correspondingly, the first communication apparatus can receive a channel quality measurement result fed back by the second communication apparatus. The channel quality measurement result may include subband measurement information of each subband on the channel. Further, the first communication apparatus can selectively perform, based on the subband measurement information, power water filling on subbands occupied by the plurality of spatial streams. In embodiments of this application, performing power water filling on a subband means that power of the subband is reduced. A first power value represents power of a target subband on which the power water filling needs to be performed before power water filling processing, and a second power value represents power of the target subband after the power water filling processing. Through the power water filling, the second power value is less than the first power value.

Therefore, power control on some subbands (for example, some subbands with strong received signal strength) occupied by each spatial stream can be selectively implemented based on a subband granularity, so that a difference of signal strength of each spatial stream received by the second communication apparatus at different locations in a bandwidth is reduced, and a problem that demodulation is difficult caused by obvious signal fading at some frequencies due to frequency selectivity caused by a multipath channel is avoided as much as possible, to ensure demodulation performance of the second communication apparatus as the receive end. According to this solution, for example, during near strong field communication, power of a strong subband may be appropriately reduced, so that when receiving a transmit signal of the first communication apparatus and performing AGC processing, the second communication apparatus at the peer end relatively increases an LNA range, to reduce a noise factor of the second communication apparatus, and increase signal-to-noise ratios of some subbands with weak received signal strength, so as to enhance a demodulation capability of the second communication apparatus.

It may be understood that, in embodiments of this application, the first communication apparatus can indicate, based on an application scenario, a service requirement, and the like, the second communication apparatus to divide a bandwidth of the channel into a plurality of corresponding subbands, and perform measurement and feedback based on a subband granularity. In this way, the problem that demodulation is difficult due to fading differences at different locations of a frequency band in an existing solution can be resolved, and demodulation performance can be ensured. In addition, the subband may have a larger granularity than a subcarrier, to avoid large overheads caused by measurement and feedback performed by using a subcarrier granularity.

It may be understood that, in embodiments of this application, this is merely intended to distinguish but not to limit any function of communication apparatuses. In another embodiment, the first communication apparatus may also be used as a receive end, and the second communication apparatus may also be used as a transmit end. This is not limited in this application.

It may be understood that, in embodiments of this application, the communication apparatus may be implemented as a chip or a communication device. When being implemented as the communication device, the communication apparatus may be a network device and/or a terminal device in the communication system.

To make objectives, technical solutions, and advantages of embodiments of this application clearer, the following further describes embodiments of this application in detail with reference to the accompanying drawings.

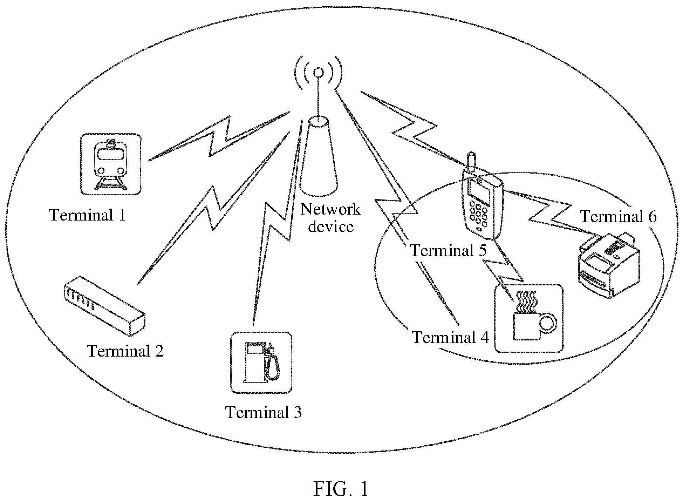

FIG. 1 is a schematic diagram of a structure of a communication system according to an embodiment of this application. The communication system includes a network device and at least one terminal device (for example, terminals 1 to 6 shown in FIG. 1). The network device may communicate with the at least one terminal device (for example, a terminal 1) through an uplink (uplink, UL) and a downlink (downlink, DL). The uplink is a physical link from the terminal device to the network device, and the downlink is a physical layer communication link from the network device to the terminal device.

Optionally, both the network device and the terminal device may have a plurality of transmit and receive antennas, and the network device may communicate with the at least one terminal device by using, for example, a MIMO technology.

It should be understood that there may alternatively be a plurality of network devices in the communication system, and one network device may provide a service for a plurality of terminal devices. A quantity of network devices and a quantity of terminal devices included in the communication system are not limited in embodiments of this application. The network device and each of some or all of the at least one terminal device in FIG. 1 may implement the technical solution provided in embodiments of this application. In addition, various terminal devices shown in FIG. 1 are merely some examples of the terminal devices. It should be understood that the terminal device in embodiments of this application is not limited thereto.

The solution provided in embodiments of this application may be applied to the network device or the terminal device in the communication system. For example, the first communication apparatus may be the network device, and the second communication apparatus may be the terminal device. Alternatively, the first communication apparatus may be the terminal device, and the second communication apparatus may be the network device.

The network device mentioned in embodiments of this application is also referred to as an access network device, and is a device that is in a network and that is configured to connect a terminal device to a wireless network. The network device may be a node in a radio access network, may also be referred to as a base station, or may also be referred to as a RAN node (or device). The network device may be an evolved NodeB (evolved NodeB, eNodeB) in an LTE system or an LTE-advanced (LTE-Advanced, LTE-A) system, or may be a next generation node B (next generation node B, gNodeB) in a 5G NR system, or may be a node B (Node B, NB), a base station controller (base station controller, BSC), a base transceiver station (base transceiver station, BTS), a transmission reception point (transmission reception point, TRP), a home NodeB (for example, a home evolved NodeB, or a home NodeB, HNB), a baseband unit (baseband unit, BBU), or a Wi-Fi access point (access point, AP), a relay node, an integrated access and backhaul (integrated access and backhaul, IAB) node, a base station in a future mobile communication system, or the like, or may be a central unit (central unit, CU) and a distributed unit (distributed unit, DU). This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP); and the DU mainly supports a radio link control (radio link control, RLC) layer protocol, a medium access control (medium access control, MAC) layer protocol, and a physical layer protocol.

The terminal device mentioned in embodiments of this application is a device having a wireless transceiver function, and may be deployed on land, including an indoor, outdoor, handheld, wearable, or in-vehicle device; or may be deployed on a water surface (for example, on a ship); or may be deployed in the air (for example, on a plane, a balloon, or a satellite). The terminal device may communicate with a core network through a radio access network (radio access network, RAN), and exchange voice and/or data with the RAN. The terminal device may be a mobile phone, a tablet computer, a computer having a wireless transceiver function, a mobile internet device, a wearable device, a virtual reality terminal device, an augmented reality terminal device, a wireless terminal in industrial control, a wireless terminal in self-driving, a wireless terminal in telemedicine, a wireless terminal in a smart grid, a wireless terminal in transportation safety, a wireless terminal in a smart city, a wireless terminal in a smart home, or the like. An application scenario is not limited in embodiments of this application. Sometimes, the terminal device may also be referred to as user equipment (user equipment, UE), a mobile station, a remote station, or the like. A specific technology, a device form, and a name that are used by the terminal device are not limited in embodiments of this application.

A carrier (which may also be referred to as a carrier frequency) in embodiments of this application refers to a radio wave having a particular frequency and bandwidth (for example, 10 M, 40 M, or 80 M), and is used to carry a to-be-transmitted radio signal. A frequency band refers to some spectrum resources used in wireless communication, for example, an 1800 M frequency band used in the LTE system. Generally, one frequency band includes a plurality of carriers. For example, a bandwidth of the 1800 M frequency band is 75 M, and then the frequency band may include m (m$\geq$1) carriers whose bandwidth is 20 M and n (n$\geq$1) carriers whose bandwidth is 10 M. Certainly, there may alternatively be another manner of defining a carrier. This is not limited in this application. In this application, one receive channel or transmit channel may process a signal that includes at least one carrier. In this application, a subband is obtained by dividing a frequency domain bandwidth based on a predetermined subband width, and may also be referred to as a sub-frequency band.

It should be noted that in the following description of embodiments of this application, a communication apparatus configured to send measurement indication information may also be referred to as a transmit end communication apparatus or a transmit apparatus, and a communication apparatus configured to receive the measurement indication information may also be referred to as a receive end communication apparatus or a receive apparatus. It may be understood that, in embodiments of this application, the communication device is distinguished only based on a function of sending or receiving the measurement indication information, but the function of the communication apparatus is not limited.

It should be noted that, in the following description of embodiments of this application, a matrix is represented by using an uppercase bold letter, a vector is represented by using a lowercase bold letter, and $(\cdot)^H$, $(\cdot)^T$, and $(\cdot)^*$ represent conjugate transposition, transposition, and complex conjugate transformation of a matrix/vector.

It should be noted that the terms "system" and "network" may be used interchangeably in embodiments of this application, and "a plurality of" means two or more. In view of this, in embodiments of this application, "a plurality of" may alternatively be understood as "at least two". "At least one" may be understood as one or more, for example, one, two, or more. For example, including at least one means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship between associated objects and indicates that three relationships may exist. For example, A and/or B may indicate the following cases: Only A exists, both A and B exist, and only B exists, where A and B may be singular or plural. In addition, the character "/" usually indicates an "or" relationship between the associated objects unless otherwise specified.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

An embodiment of this application provides a power control method. The method may be implemented by a communication apparatus. The communication apparatus may be implemented as the network device or the terminal device in the communication system shown in FIG. 1, and may also be referred to as a first communication apparatus for short below. In addition, for ease of differentiation, a communication apparatus at a peer end may be referred to as a second communication apparatus for short. It may be understood that, in the communication system, both the first communication apparatus and the second communication apparatus may support a plurality of wireless communication protocols, and the power control method in this embodiment of this application is applicable to any scenario in which channel quality measurement can be performed, or any scenario in which a channel quality measurement result can be obtained.

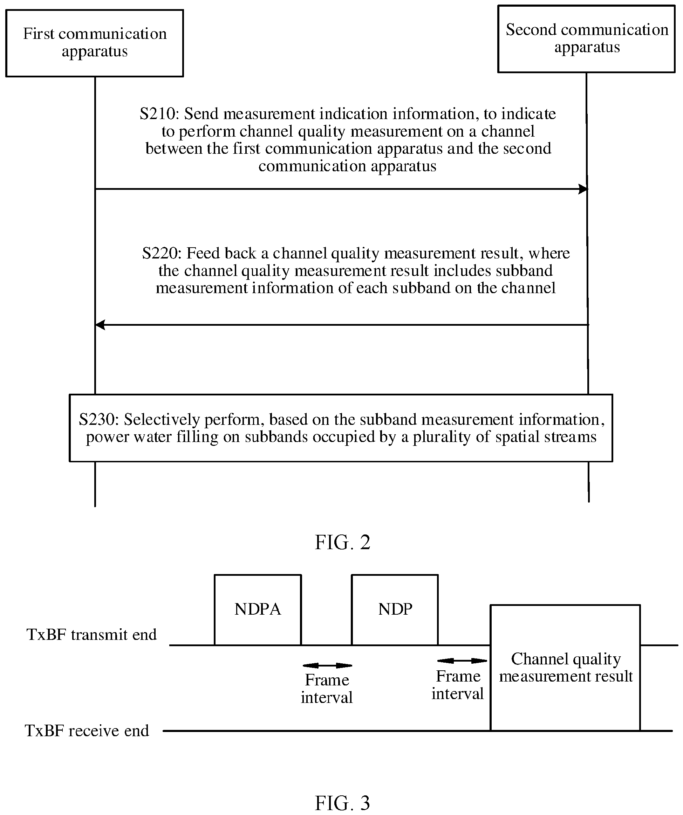

The following describes detailed steps of the power control method in this embodiment of this application with reference to a method flowchart shown in FIG. 2.

S210: A first communication apparatus sends measurement indication information to a second communication apparatus, to indicate the second communication apparatus to perform channel quality measurement on a channel between the first communication apparatus and the second communication apparatus. Each of a plurality of spatial streams occupies a plurality of subbands on the channel.

The measurement indication information may be carried in a measurement frame sent by the first communication apparatus, and may indicate a measurement parameter that needs to be measured and/or indicate information that needs to be fed back by the second communication apparatus when the second communication apparatus needs to perform channel quality measurement on the channel between the two communication apparatuses. According to a supported wireless communication protocol, the first communication apparatus and the second communication apparatus may pre-agree on related information that needs to be measured and/or fed back for power control. When determining that channel measurement needs to be performed, the first communication apparatus sends the measurement indication information to indicate the second communication apparatus to start a measurement process and feed back corresponding information.

To ensure demodulation performance, the measurement parameter indicated by the first communication apparatus by using the measurement indication information may be a parameter, for example, average signal-to-noise ratio information, closely correlated to the demodulation performance of the second communication apparatus and may include an average signal-to-noise ratio that is directly obtained or other information that can be used to indirectly obtain an average signal-to-noise ratio. This is not limited in this application. Required information may be obtained based on a granularity such as a spatial stream/subband/subcarrier. This is not limited in this application. In consideration of a problem that demodulation is difficult due to obvious fading at some frequencies in a scenario of a large bandwidth and a plurality of spatial streams and an overheads problem when control is performed based on a subcarrier granularity, in embodiments of this specification, power control is performed based on a subband granularity. Based on a configured algorithm, to obtain a related measurement result based on the subband granularity, measurement is allowed to be performed based on the granularity such as the spatial stream/subband/subcarrier during channel quality measurement. This is not limited in this application.

In addition, in different cases, the first communication apparatus may communicate with different second communication apparatuses. To be flexibly applied to various different scenarios, the first communication apparatus and the second communication apparatus may alternatively pre-agree on configuration information of a subband width, for example, agree on that different values are set on fields and/or bit locations of a measurement frame to indicate different subband widths. When starting measurement, the first communication apparatus can indicate, by using the measurement indication information, a subband width required for current measurement. Correspondingly, when performing channel quality measurement, the second communication apparatus divides a frequency domain bandwidth (which is referred to as a frequency band for short) into a plurality of corresponding subbands based on the subband width indicated by the first communication apparatus, and performs corresponding measurement and calculation based on the plurality of divided subbands, to obtain a related parameter measurement result that needs to be fed back to the first communication apparatus. The following provides a detailed description with reference to specific examples, and details are not described herein temporarily.

S220: The first communication apparatus receives a channel quality measurement result fed back by the second communication apparatus, where the channel quality measurement result includes subband measurement information of each subband on the channel.

The channel quality measurement result may be carried in a response frame fed back by the second communication apparatus in response to the measurement frame. The subband measurement information may include result information, for example, subband average signal-to-noise ratio information, obtained by performing measurement based on a subband granularity after a bandwidth of the channel is divided into a plurality of subbands based on a subband width. The channel quality measurement result may include, but not limited to, subband measurement information of each subband on the channel. The following provides a detailed description with reference to specific examples, and details are not described herein temporarily.

S230: The first communication apparatus selectively performs, based on the subband measurement information, power water filling on subbands occupied by the plurality of spatial streams.

In embodiments of this application, a subband that is selected as a subband on which the power water filling needs to be performed is referred to as a target subband, and the power water filling does not need to be performed on other subbands than the target subband in the subbands occupied by the plurality of spatial streams.

In embodiments of this application, performing power water filling on the target subband means that power of the target subband is reduced. A first power value represents power of a target subband on which the power water filling needs to be performed before power water filling processing, and a second power value represents power of the target subband after the power water filling processing. Through the power water filling, the second power value is less than the first power value. Therefore, after a transmit signal of the first communication apparatus arrives at the second communication apparatus, total receive power of the second communication apparatus is relatively reduced, and when performing processing such as AGC, the second communication apparatus may relatively increase an LNA range, to reduce a noise figure, so as to improve a signal-to-noise ratio of an antenna port of a weak subband and enhance a demodulation capability of the second communication apparatus. The following provides a detailed description with reference to specific examples, and details are not described herein temporarily.

It may be understood that, in embodiments of this application, because measurement and power control are performed based on the measurement frame, a power adjustment value of a subband may be based on a power adjustment value of the measurement frame, that is, the first power value may be equal to a power value of the measurement frame.

It may be understood that, in specific application, information included in the measurement indication information may not be in a one-to-one correspondence with information included in the channel quality measurement result. For example, the first communication apparatus can indicate, by using the measurement indication information, the second communication apparatus to measure a plurality of measurement parameters and indicate the second communication apparatus to feed back all or some obtained measurement results, or can indicate, by using the measurement indication information, result information that needs to be fed back by the second communication apparatus, and the second communication apparatus measures a related parameter based on an algorithm configured by the second communication apparatus and then feeds back the result information to the first communication apparatus.

It may be understood that, during specific implementation, based on an application scenario, a service requirement, or the like, the first communication apparatus may be an apparatus that can both perform channel quality measurement and indicate the second communication apparatus at the peer end to perform channel quality measurement. A function of the first communication apparatus is not limited in this application. In some embodiments, if the first communication apparatus needs to perform corresponding measurement to obtain a related measurement result to implement the function of the first communication apparatus, the first communication apparatus can also trigger related measurement. This is not limited in this application.

It may be understood that, due to unpredictability of a wireless channel, to ensure communication quality and demodulation performance of the second communication apparatus as a receive end, the first communication apparatus can periodically indicate the second communication apparatus to perform channel quality measurement on the channel between the first communication apparatus and the second communication apparatus, and selectively perform, in this periodicity based on obtained related feedback, power water filling on the subbands occupied by the plurality of spatial streams. Considering a possibly used subband width, the first communication apparatus can indicate, in one measurement periodicity by using the measurement indication information, a subband width that needs to be used in the current measurement periodicity. Correspondingly, the second communication apparatus performs frequency band division, measurement, and feedback based on the subband width indicated by the first communication apparatus. A subband width indicated and used in a next measurement periodicity may be different.

It should be noted that when the first communication apparatus and/or the second communication apparatus are/is implemented as a terminal device, because of mobility of the device, when the first communication apparatus and/or the second communication apparatus are/is disconnected from communication, measurement and feedback may not be periodically indicated. Details are not described herein.

In this embodiment of this application, during specific implementation, in S230, for the subbands occupied by the plurality of spatial streams, the first communication apparatus can obtain water filling values of the subbands, and perform power water filling on the corresponding subbands by using the obtained water filling values. Based on the configured algorithm, the water filling value of the subband may be implemented differently. For example, the water filling value may be a power adjustment value of the subband. For example, a target power adjustment value of a target subband on which the power water filling needs to be performed is greater than 0, and a target power adjustment value of a subband on which the power water filling does not need to be performed is 0. Alternatively, the water filling value may be a corresponding adjustment coefficient after conversion is performed based on a power adjustment value of the subband. For example, an adjustment coefficient of a target subband on which power water filling needs to be performed is less than 1, and an adjustment coefficient of a subband on which the power water filling does not need to be performed is equal to 1. In addition, the channel quality measurement result fed back by the second communication apparatus may alternatively be implemented as control signaling, that is, the second communication apparatus may indicate, to the first communication apparatus, a target subband on which the power water filling needs to be performed and a water filling value corresponding to the target subband. A specific implementation of the power water filling function is not limited in this application.

In an optional implementation, a related algorithm may be configured in the first communication apparatus. The first communication apparatus can indicate the second communication apparatus to measure and feed back information that can be used to directly or indirectly obtain a water filling value of each subband. The first communication apparatus determines the water filling value of each subband based on the feedback information and performs power control in S230. In another implementation, a related algorithm may be configured in the second communication apparatus. After performing corresponding measurement based on the measurement indication information, the second communication apparatus feeds back a water filling value, a power adjustment value, or an adjustment coefficient of each subband, or feeds back control signaling. In S230, the first communication apparatus obtains a related indication from the channel quality measurement result, and performs power water filling on the subbands occupied by the plurality of spatial streams. A specific implementation is not limited in this application.

For example, in a first implementation, the first communication apparatus performs calculation and decision-making. Herein, the subband measurement information of each subband fed back by the second communication apparatus may include corresponding subband average signal-to-noise ratio information when each spatial stream occupies the subband. In S230, the first communication apparatus can selectively perform, based on the subband average signal-to-noise ratio information, power water filling on the subbands occupied by the plurality of spatial streams. Specifically, for example, the first communication apparatus can determine, based on the subband average signal-to-noise ratio information, a power adjustment value of each subband occupied by each spatial stream; for each subband occupied by each spatial stream, when the power adjustment value of the subband meets a preset adjustment condition, select the subband as a target subband on which the power water filling needs to be performed in the spatial stream; and perform power water filling on the target subband based on a target power adjustment value of the target subband.

In a second implementation, the second communication apparatus performs calculation and decision-making. Herein, based on a result of calculation and decision-making (the implementation may be the same as the first implementation), the subband measurement information of each subband fed back by the second communication apparatus may include a corresponding power adjustment value when each spatial stream occupies the subband. Correspondingly, the first communication apparatus can selectively perform, based on an obtained power adjustment value (or a water filling value obtained after conversion) of each subband, power water filling on the subbands occupied by the plurality of spatial streams. A target power adjustment value of a target subband that is selected by the second communication apparatus and on which the power water filling needs to be performed in a corresponding spatial stream is greater than 0, and a power adjustment value of a subband other than the target subband is equal to 0.

Based on the obtained water filling values of the subbands, when subsequently transmitting a signal, the first communication apparatus can respectively adjust power of a corresponding subband by using the water filling value corresponding to each subband, to reduce power of some subbands occupied by a corresponding spatial stream, so as to reduce total receive power of a receive end. Further, after the transmit signal arrives at the second communication apparatus, when performing processing such as AGC, the second communication apparatus may relatively increase an LNA range, to reduce a noise figure, so as to improve a signal-to-noise ratio of an antenna port of a weak subband and enhance a demodulation capability of the second communication apparatus.

Based on the power control method, in a scenario in which a large bandwidth and a plurality of spatial streams are supported, a channel status between two communication apparatuses is measured and a water filling value based on a subband granularity is obtained, to adjust, based on the subband granularity, power of some subbands (for example, some subbands with strong received signal strength) occupied by each spatial stream, so that a difference of signal strength of each spatial stream received by the receive end at different locations in a bandwidth is reduced, and a problem that demodulation is difficult caused by obvious signal fading at some frequencies due to frequency selectivity caused by a multipath channel is avoided as much as possible.

It may be understood that the water filling value of the subband obtained in the foregoing embodiments may be used for a signal transmit end to adjust power of a corresponding subband at any processing phase. This is not limited in this application. A TxBF scenario is used as an example. A water filling value of a subband may be used to obtain a precoding matrix when a TxBF transmit end performs precoding processing, so that precoding processing is performed on a to-be-transmitted signal by using the obtained precoding matrix, to reduce power of some subbands in the precoding processing process. Herein, if a signal obtained through frequency domain precoding power adjustment is converted to time domain through OFDM modulation, antenna power normalization, for example, maximum antenna power normalization or total antenna power normalization, further needs to be performed on the signal. A power change of a subband caused by the normalization processing process is not temporarily considered in the scope of this application.

In addition, performing power water filling processing on some subbands may cause signal strength of a corresponding transmit signal received by a receive end to be weakened, resulting in reduction of demodulation quality. Therefore, in the power control solution in this application, to avoid demodulation quality deterioration caused by power reduction of some subbands as much as possible, when performing calculation and determining a target subband on which the power water filling needs to be performed, the first communication apparatus or the second communication apparatus may further set a corresponding adjustment threshold, that is, a power adjustment value upper limit, for a target power adjustment value of each target subband, so that the target power adjustment value of each target subband is less than or equal to the adjustment threshold. A same power adjustment value upper limit may be set for subbands respectively occupied by different spatial streams, to avoid a potential problem that demodulation is difficult or demodulation quality is reduced after power of the subbands occupied by different spatial streams is adjusted to different degrees by using different adjustment rules.

For example, the adjustment threshold may be obtained based on a power value (which is referred to as a maximum RSSI for short) of an antenna that is of the second communication apparatus and that has a maximum RSSI and received signal strength corresponding to an error vector magnitude (error vector magnitude, EVM) inflection point. Herein, the EVM represents quality of a demodulation signal and is generally a negative value, and a smaller value indicates higher demodulation quality of a communication apparatus (for example, a receive end). The EVM inflection point is a critical point at which the EVM of the receive end deteriorates. When an actual EVM value of the receive end is greater than an EVM value at the EVM inflection point of the communication apparatus, demodulation quality of the communication apparatus is reduced. An upper limit of a power adjustment value corresponding to each subband is limited based on a difference between maximum received signal strength and received signal strength corresponding to the EVM inflection point. When a demodulation capability of the receive end is enhanced, it is ensured that the demodulation quality of the receive end falls within an acceptable deterioration range, and a problem that demodulation quality is reduced caused by power reduction of some subbands is avoided as much as possible.

It may be understood that, because the received signal strength RSSI corresponding to the EVM inflection point is stable for each communication apparatus, in this embodiment of this application, the received signal strength RSSI corresponding to the EVM inflection point may be determined based on an empirical value, or may be fed back by the second communication apparatus (which may be fed back only once). This is not limited in this application. In addition, that the upper limit of the power adjustment value corresponding to each subband may be determined based on the received signal strength corresponding to the EVM inflection point is only described as an example, and the upper limit is not limited. In some embodiments, the upper limit of the power adjustment value corresponding to each subband may be further determined based on another basis. This is not limited in this application.

It should be noted that, because the wireless communication protocols and the algorithm configurations supported by the communication apparatuses are different, in different cases, the power control solution in this application may have different specific implementations, and information exchanged between the two communication apparatuses is also different.

For example, an algorithm for calculation and decision-making may include: For each subband occupied by each spatial stream, the power adjustment value of the subband is a difference between a subband average signal-to-noise ratio of the subband and a specified parameter value. The specified parameter value is a sum of a minimum value of subband average signal-to-noise ratios of the subbands occupied by the plurality of spatial streams and a preset constant value, and the preset constant value is an empirical value or a simulated value obtained based on a condition number The adjustment condition may include: The power adjustment value of the subband is greater than 0. A limitation condition may include: A target power adjustment value of each target subband is less than or equal to an adjustment threshold, and the adjustment threshold is an upper limit of a power adjustment value of a subband.

Herein, in a first implementation, to enable the first communication apparatus to obtain a power adjustment value of a subband to obtain a water filling value of the subband, any information required for obtaining the power adjustment value of the subband may be carried in the channel quality measurement result by the second communication apparatus and fed back to the first communication apparatus. Related information of the adjustment condition/limitation condition may be configured on a first communication apparatus side, or may be carried in the channel quality measurement result by the second communication apparatus and fed back to the first communication apparatus. This is not limited in this application.

In an example of the first implementation, subband average signal-to-noise ratio information that is of each subband occupied by each spatial stream and that is fed back by the second communication apparatus may include a subband average signal-to-noise ratio of the subband in the spatial stream. The first communication apparatus can determine the power adjustment value of the subband based on the subband average signal-to-noise ratio, and determine, with reference to the preset adjustment condition and/or the preset limitation condition, a target subband on which the power water filling needs to be performed and a water filling value of the target subband.

In an example of the first implementation, subband average signal-to-noise ratio information that is of each subband occupied by each spatial stream and that is fed back by the second communication apparatus may include a signal-to-noise ratio difference of each subband in each spatial stream. The signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream. The first communication apparatus can calculate a subband average signal-to-noise ratio of the subband in the spatial stream based on the signal-to-noise ratio difference of the subband in the spatial stream and the stream average signal-to-noise ratio of the spatial stream. Further, the first communication apparatus can determine the power adjustment value of the subband based on the subband average signal-to-noise ratio, and determine, with reference to the preset adjustment condition and/or the preset limitation condition, a target subband on which the power water filling needs to be performed and a water filling value of the target subband.

In an example of the first implementation, the channel quality measurement result may include an adjustment threshold.

In an example of the first implementation, the channel quality measurement result may include a maximum received signal strength RSSI. The maximum RSSI is a power value of an antenna that is of the second communication apparatus and that has a maximum RSSI, and the adjustment threshold is a difference between the maximum RSSI and a preset RSSI threshold. The preset RSSI threshold may be configured on the first communication apparatus side, or may be carried in the channel quality measurement result fed back by the second communication apparatus.

In an example of the first implementation, the preset RSSI threshold may be an RSSI corresponding to an EVM inflection point of the second communication apparatus. The RSSI corresponding to the error vector magnitude EVM inflection point of the second communication apparatus may be obtained by the first communication apparatus through estimation, or may be carried in the channel quality measurement result fed back by the second communication apparatus.

In a second implementation, to enable the second communication apparatus to obtain a power adjustment value of a subband so that the first communication apparatus obtains a water filling value of the subband based on feedback of the second communication apparatus, the first communication apparatus can indicate, in the measurement indication information, any parameter that needs to be measured to obtain the power adjustment value of the subband, so that the second communication apparatus performs measurement and calculation, and feeds back a related result to the first communication apparatus.

In an example of the second implementation, the parameter indicated by the measurement indication information may include the power adjustment value of the subband. Correspondingly, after starting measurement based on the measurement indication information, the second communication apparatus performs calculation and decision-making with reference to the foregoing algorithm, and feeds back power adjustment values of the subbands occupied by the plurality of spatial streams to the first communication apparatus. A target power adjustment value of a target subband that is selected by the second communication apparatus and on which the power water filling needs to be performed in the spatial stream is greater than 0 and less than or equal to an adjustment threshold, and a power adjustment value of a subband other than the target subband is equal to 0.

In an example of the second implementation, the channel quality measurement result may further include a stream average signal-to-noise ratio estimated value of each spatial stream, and the stream average signal-to-noise ratio estimated value is a corresponding stream average signal-to-noise ratio that is estimated by the second communication apparatus and that is obtained after the first communication apparatus performs power water filling on the target subband based on the target power adjustment value. Based on the stream average signal-to-noise ratio estimated value of each spatial stream, the first communication apparatus can perform modulation and coding scheme (modulation and coding scheme, MCS) scheduling. Because a modulation and coding scheme of the first communication apparatus on each spatial stream is the same, when performing MCS scheduling based on the stream average signal-to-noise ratio estimated value, the first communication apparatus can select an appropriate modulation and coding scheme. Correspondingly, when performing AGC control, the receive end obtains an appropriate LNA range, to enhance the demodulation capability of the receive end.

To better understand the technical solution of this application, the following describes specific implementations of the steps shown in FIG. 2 with reference to different examples by using an example in which the power control solution in this application is applied to a TxBF scenario. It should be noted that, in the following embodiments, the power control solution in this application is described only by using a TxBF scenario as an example, but is not limited. The power control solution in embodiments of this application may be applied to any scenario in which channel quality measurement and/or power control are/is performed. A transmit end communication apparatus may alternatively obtain a channel quality measurement result and/or a power adjustment value set from a third-party apparatus other than the receive end. This is not limited in this application.

In the TxBF scenario, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result may further include a weighting vector of a subcarrier.

Refer to FIG. 3, a TxBF transmit end (that is, the first communication apparatus) can first send a notification frame (an NDPA frame) to a TxBF receive end (that is, the second communication apparatus), to notify the TxBF receive end to start a Beamforming process. Subsequently, the TxBF transmit end sends a null data packet (null data packet, NDP) frame to the TxBF receive end, to indicate sounding measurement of TxBF. The TxBF receive end performs channel estimation based on the received sounding NDP frame, calculates a weighting vector (or a V matrix) of a subcarrier and other information required for selectively performing power water filling on subbands occupied by a plurality of spatial streams, and carries the information that needs to be fed back as a channel quality measurement result in a response frame and feeds back the channel quality measurement result to the TxBF transmit end.

Both the NDPA frame and the NDP frame are measurement frames. The measurement indication information may be carried in the measurement frame. For example, the measurement indication information may be located in a high efficient signaling field in the measurement frame, and different values may be set in corresponding bits of the high efficient signaling field to indicate different subband widths.

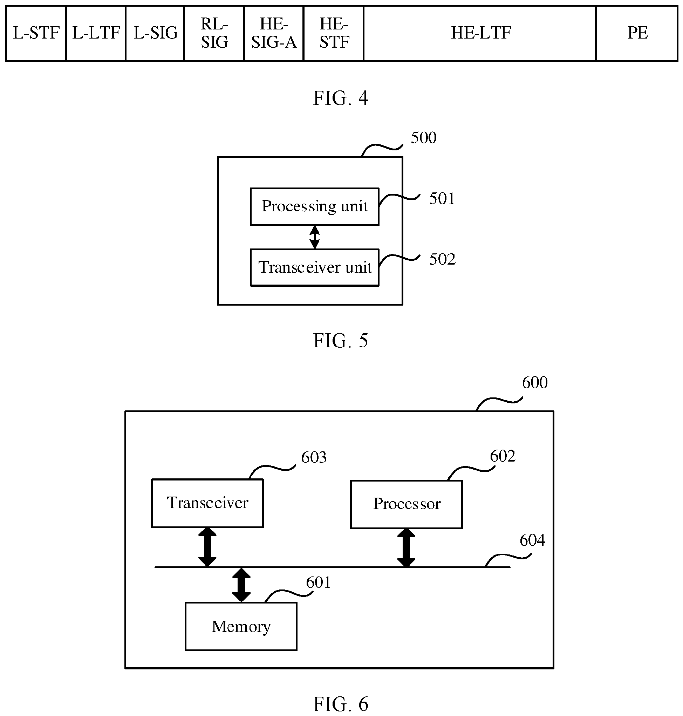

Refer to a structure of an NDP frame shown in FIG. 4, for example, in an 802. 1 1ax protocol mode, information carried in a high efficient signaling field A (HE-SIG-A) in the NDP frame may indicate measurement and/or feedback information that needs to be fed back by the TxBF receive end. Different values may be set at predetermined bit locations in the HE-SIG-A to indicate different subband widths. For example, 13 may be set at bit locations B3 to B6 in HE-SIG-A1 to indicate that a subband width is 10 M, or 14 may be set at bit locations B3 to B6 to indicate that a subband width is 20 M, or 15 may be set at bit locations B3 to B6 to indicate that a subband width is 40 M. Correspondingly, after receiving the NDP frame, when performing channel estimation, the TxBF receive end performs measurement and calculation based on the subband width indicated by the bit locations B3 to B6, to obtain a required subband granularity measurement result.

It may be understood that this is merely an example for description herein, and is not any limitation on an indication of a subband width and subband division. In another embodiment, a subband width or measurement information that needs to be fed back by the TxBF receive end may be indicated by performing corresponding configuration in different messages or fields, or different subband widths may be respectively indicated in different channel quality measurement processes, to perform channel quality measurement. In this way, the two communication apparatuses can flexibly determine how to obtain the channel quality measurement result and how to perform power control. This is not limited in this application.

As described above, when different algorithms are used, both the measurement indication information sent by the TxBF transmit end used as the first communication apparatus and the channel quality measurement result fed back by the TxBF receive end used as the second communication apparatus may be implemented in different ways. The following provides descriptions with reference to corresponding examples. It may be understood that, in the following examples, a manner of obtaining related information required for implementing the power control solution in this application is described only with reference to the TxBF scenario. For other implementations that may be involved in the TxBF scenario to which this application is applied, refer to FIG. 3, FIG. 4, or the prior related technology. Details are not described herein again.

For ease of understanding and differentiation, in the following, n represents a stream index, j represents a subband index, values of n and j may be integers greater than or equal to 0, and measurement parameters involved in the following example may include:

(1) a stream average signal-to-noise ratio of each spatial stream, which is represented as $aveSNR[n]$, where a stream average signal-to-noise ratio estimated value of each spatial stream is represented as $aveSNR[n]$ ;
(2) a subband average signal-to-noise ratio of each subband in each spatial stream, which is represented as $aveSNR[n][j]$;
(3) a signal-to-noise ratio difference of each subband in each spatial stream, which is represented as $Dsnr[n][j]$;
(3) a minimum value of subband average signal-to-noise ratios of a plurality of subbands in a plurality of spatial streams, which is represented as $aveSNR[n][j]_{min}$;
(4) a power adjustment value of each subband in each spatial stream, which is represented as $Adj[n][j]$;
(5) a water filling value (which is also referred to as a power adjustment linear value) of a subband, which is represented as $k[n][j]$; and
(6) an adjustment threshold, which is represented as $Limit\_Adj$.

For a same representation in the following, refer to the explanation herein. Details are not described in the following again.

First implementation

In this implementation, the TxBF transmit end can indicate the TxBF receive end to perform channel quality measurement on a channel between the TxBF transmit end and the TxBF receive end, and the TxBF receive end feeds back a related channel quality measurement result to the TxBF transmit end. The channel quality measurement result may include a measurement result corresponding to each measurement parameter, so that the TxBF transmit end performs calculation and decision-making based on the received feedback information, and selectively performs power water filling on subbands occupied by a plurality of spatial streams when subsequently transmitting a signal to the TxBF receive end.

Example 1: A measurement parameter indicated by measurement indication information sent by the TxBF transmit end may include: a weighting vector of a subcarrier, a subband average signal-to-noise ratio of a subband in a spatial stream, and a maximum RSSI (that is, a power value of an antenna having maximum received signal strength). Correspondingly, the channel quality measurement result fed back by the TxBF receive end may include a weighting vector of a subcarrier or a subcarrier group, $aveSNR[n][j]$, and a maximum RSSI.

Example 2: A measurement parameter indicated by measurement indication information sent by the TxBF transmit end may include: a weighting vector of a subcarrier, a stream average signal-to-noise ratio of a spatial stream, a signal-to-noise ratio difference of a subband in the spatial stream (a difference between a signal-to-noise ratio of the subband in the spatial stream and the stream average signal-to-noise ratio of the spatial stream), and a maximum RSSI. Correspondingly, the channel quality measurement result fed back by the TxBF receive end may include a weighting vector of a subcarrier or a subcarrier group, $aveSNR[n]$, $Dsnr[n][j]$, and a maximum RSSI.

Example 3: A measurement parameter indicated by measurement indication information sent by the TxBF transmit end may include: a weighting vector of a subcarrier, a stream average signal-to-noise ratio of a spatial stream, a signal-to-noise ratio difference of a subband in the spatial stream (a difference between a signal-to-noise ratio of the subband in the spatial stream and the stream average signal-to-noise ratio of the spatial stream), and an adjustment threshold. Correspondingly, the channel quality measurement result fed back by the TxBF receive end may include a weighting vector of a subcarrier or a subcarrier group, aveSNR[n], Dsnr[n][j], and Limit_Adj.

A scenario of a 20 M system bandwidth and 4*4 (that is, four transmit antennas and four receive antennas) with four spatial streams is used as an example, when signaling of the TxBF transmit end indicates that measurement and feedback are performed based on a granularity of a 10 M subband width, the channel quality measurement result fed back by the TxBF receive end to the TxBF transmit end may include information in any one of the foregoing Example 1 to Example 3. A value of n may be 0, 1, 2, or 3, and a value of j may be 0 or 1.

On a TxBF transmit end side, a process of calculating a power adjustment value of a subband j in a spatial stream n is as follows.

(a). Calculate a subband average signal-to-noise ratio (which is obtained from the channel quality measurement result in Example 1) of the subband j in the spatial stream n:

$$aveSNR[n][j]=aveSNR[n]+Dsnr[n][j]$$

(b). Determine a minimum value $aveSNR[n][j]_{min}$ of subband average signal-to-noise ratios based on the subband average signal-to-noise ratio aveSNR[n][j].

(c). Calculate the power adjustment value of the subband j in the spatial stream n by using the following formula:

$$Adj[n][j]=aveSNR[n][j]-aveSNR[n][j]_{min}-Limit\_CN$$

The limit_CN is a limit value for power adjustment. By setting the limit_CN, power of the subband can be prevented from being reduced too much, which affects overall demodulation performance. During specific implementation, the limit_CN may be a preset constant value, and may be an empirical value or a simulated value obtained based on a condition number (condition number, CN). For example, an average CN value (which may be equal to aveSNR[n]max - aveSNR[n]min herein) of the system bandwidth may be preset based on a preset value of simulation or test experience, and a maximum value aveSNR[n]max of stream average signal-to-noise ratios and a minimum value aveSNR[n]min of stream average signal-to-noise ratios are respectively a maximum value and a minimum value of aveSNRs in a plurality of spatial streams.

If Adj [n] [j] of the subband j obtained through calculation in the spatial stream n is less than or equal to 0, Adj[n][j] =0. That is, no power water filling is performed on the subband.

Otherwise, the following judgment is performed: If 0<Adj[n][j]≤Limit_Adj, Adj[n][j] may be kept as a calculated value; and if Adj[n][j]&>Limit_Adj, Adj[n][j]=Limit_Adj. The Limit_Adj represents an adjustment threshold, that is, an upper limit of an adjustment value corresponding to a subband occupied by a spatial stream. That is, a target power adjustment value of a selected target subband is less than or equal to the adjustment threshold.

Limit_Adj may be determined based on, for example, a difference between a maximum RSSI and a received signal strength threshold RSSI_Threshold. When a maximum RSSI-RSSI_Threshold is greater than 0, Limit_Adj=maximum RSSI-RSSI_Threshold. When the maximum RSSI-RSSI_Threshold is less than or equal to 0, Limit_Adj=0.

(d) Obtain a corresponding water filling value k[n][j] of the subband j in the spatial stream n through calculation by using the following formula:

$$k[n][j] = 10^{-\frac{Adj[n][j]}{20}}$$

(e) The TxBF transmit end can perform the following processing based on the obtained weighting vector and k[n][j] corresponding to each subband occupied by each spatial stream, to obtain a precoding matrix (precoding matrix), where the precoding matrix may be used to perform precoding processing on a corresponding subband during subsequent signal transmission, and adjust power of each subband occupied by each spatial stream.

$$Precoding\ Matrix = \begin{bmatrix} V00 & V01 & V02 & V03 \\ V10 & V11 & V12 & V13 \\ V20 & V21 & V22 & V23 \\ V30 & V31 & V32 & V33 \end{bmatrix} \begin{bmatrix} k[0][j] & 0 & 0 & 0 \\ 0 & k[1][j] & 0 & 0 \\ 0 & 0 & k[2][j] & 0 \\ 0 & 0 & 0 & k[3][j] \end{bmatrix}$$

(f) The TxBF transmit end sends a transmit signal obtained through processing to the TxBF receive end.

It may be understood that the received signal strength threshold RSSI_Threshold may be an RSSI threshold that is estimated by the TxBF transmit end and that is of EVM deterioration of the TxBF receive end, or may be carried in the channel quality measurement result by the TxBF receive end and fed back to the TxBF transmit end. A specific implementation is not limited in this application.

Second implementation

In this implementation, the TxBF transmit end can indicate the TxBF receive end to perform channel quality measurement on a channel between the TxBF transmit end and the TxBF receive end, and performs calculation and decision-making to feed back a channel quality measurement result. The channel quality measurement result may include a power adjustment value set determined by the TxBF receive end, and include a power adjustment value corresponding to each subband occupied by each spatial stream. When subsequently transmitting a signal to the TxBF receive end, the TxBF transmit end selectively performs, for each spatial stream by using a power adjustment value corresponding to a corresponding subband in the determined power adjustment value set, power water filling on subbands occupied by a plurality spatial streams.

Example 4: A measurement parameter indicated by measurement indication information sent by the TxBF transmit end may include a weighting vector of a subcarrier, a power adjustment value of a subband, and a stream average signal-to-noise ratio estimated value of a spatial stream. Correspondingly, the channel quality measurement result fed back by the TxBF receive end may include: a weighting vector of a subcarrier or a subcarrier group, Adj[n][j], and aveSNR [n]'.

A scenario of a 20 M system bandwidth and 4*4 (that is, four transmit antennas and four receive antennas) with four spatial streams is used as an example, when signaling of the TxBF transmit end indicates that measurement and feedback are performed based on a granularity of a 10 M subband width, the channel quality measurement result fed back by the TxBF receive end to the TxBF transmit end may include information in any one of the foregoing Example 1 to Example 3. A value of n may be 0, 1, 2, or 3, and a value of j may be 0 or 1.

On a TxBF receive end side, a process of calculating the power adjustment value of the subband j in the spatial stream n is as follows.

(a). Calculate a subband average signal-to-noise ratio of the subband j in the spatial stream n:

$$aveSNR[n][j]=aveSNR[n]+Dsnr[n][j]$$

(b). Determine a minimum value aveSNR[n][j]min of subband average signal-to-noise ratios based on the subband average signal-to-noise ratio aveSNR[n][j].

(c). Calculate the power adjustment value of the subband j in the spatial stream n by using the following formula:

$$Adj[n][j]=aveSNR[n][j]-aveSNR[n][j]min-Limit\_CN.$$

The limit_CN is a limit value for power adjustment. By setting the limit_CN, power of the subband can be prevented from being reduced too much, which affects overall demodulation performance. During specific implementation, the limit_CN may be a preset constant value, and may be an empirical value or a simulated value obtained based on a condition number (condition number, CN). For example, an average CN value (which may be equal to aveSNR[n]max - aveSNR[n]min herein) of the system bandwidth may be preset based on a preset value of simulation or test experience, and a maximum value aveSNR[n]max of stream average signal-to-noise ratios and a minimum value aveSNR[n]min of stream average signal-to-noise ratios are respectively a maximum value and a minimum value of aveSNRs in a plurality of spatial streams.

If Adj [n] [j] of the subband j obtained through calculation in the spatial stream n is less than or equal to 0, Adj[n][j] =0. That is, no power water filling is performed on the subband.

Otherwise, the following judgment is performed: If 0<Adj[n][j]≤Limit_Adj, Adj [n] [j] may be kept as a calculated value; and if Adj[n][j]&>Limit_Adj, Adj[n][j]=Limit_Adj. The Limit_Adj represents an adjustment threshold, that is, an upper limit of an adjustment value corresponding to a subband occupied by a spatial stream. That is, a target power adjustment value of a selected target subband is less than or equal to the adjustment threshold.

Limit_Adj may be determined based on, for example, a difference between a maximum RSSI and a received signal strength threshold RSSI_Threshold. When a maximum RSSI-RSSI_Threshold is greater than 0, Limit_Adj=maximum RSSI-RSSI_Threshold. When the maximum RSSI-RSSI_Threshold is less than or equal to 0, Limit_Adj=0.

(d). The channel quality measurement result fed back by the TxBF receive end to the TxBF transmit end may include a weighting vector, a power adjustment value of each subband in each spatial stream, a stream average signal-to-noise ratio estimated value, and the like.

The TxBF transmit end obtains, based on each power adjustment value included in the channel quality measurement result, a corresponding water filling value k[n][j] of the subband j in the spatial stream n through calculation by using the following formula:

$$k[n][j] = 10^{-\frac{Adj[n][j]}{20}}$$

The TxBF transmit end can perform the following processing based on the obtained weighting vector and k[n][j] corresponding to each subband occupied by each spatial stream, to obtain a precoding matrix (precoding matrix), where the precoding matrix may be used to perform precoding processing on a corresponding subband during subsequent signal transmission, and adjust power of each subband occupied by each spatial stream.

$$Precoding\ Matrix = \begin{bmatrix} V00 & V01 & V02 & V03 \\ V10 & V11 & V12 & V13 \\ V20 & V21 & V22 & V23 \\ V30 & V31 & V32 & V33 \end{bmatrix} \begin{bmatrix} k[0][j] & 0 & 0 & 0 \\ 0 & k[1][j] & 0 & 0 \\ 0 & 0 & k[2][j] & 0 \\ 0 & 0 & 0 & k[3][j] \end{bmatrix}$$

Further, the TxBF transmit end sends a transmit signal obtained through processing to the TxBF receive end.

Therefore, in a transceiver that supports the TxBF mechanism, by using the foregoing power control method, a power adjustment value based on a subband granularity is obtained by measuring a channel status, to adjust, based on the subband granularity, power of some subbands (for example, some subbands with strong received signal strength) occupied by each spatial stream, so that when performing AGC processing, a receive end relatively increases an LNA range, to reduce a noise factor, so as to improve a signal-to-noise ratio of a weak subband and enhance a demodulation capability of the receive end.

It may be understood that, in the foregoing examples, the TxBF transmit end and the TxBF receive end may pre-agree on configuration information of a subband width, and the TxBF transmit end can indicate, in one measurement periodicity by using measurement indication information, a subband width that needs to be used in the current measurement periodicity. Further, when performing channel quality measurement, the TxBF receive end divides a bandwidth of the channel into a plurality of corresponding subbands based on the indicated subband width, and performs corresponding measurement and calculation, to obtain a related parameter measurement result that needs to be fed back to the TxBF transmit end.

It should be noted that, when performing channel quality measurement, the TxBF receive end can perform channel estimation and corresponding processing by using a long training field (long training field, LTF) carried in an NDP frame, to obtain a weighting vector (or a V matrix) corresponding to a subcarrier. A specific implementation of this measurement is not limited in this application. A feedback amount indicated in the measurement indication information may be obtained by performing noise/signal-to-noise ratio/received signal strength estimation or the like by using channel estimation or the like as an input. The implementation of a measurement process is not limited in this application.

In addition, for a communication apparatus (which includes each terminal connected to a wireless network, which may also be referred to as a STA (station) station) that does not support a TxBF function, a weighting vector (or a matrix V) of a target STA may also be obtained in a legacy transmit beamforming (legacy TxBF) manner, a weighting vector in a beamforming function is calculated by using an uplink channel estimation result and by replacing the downlink channel with the uplink channel and an access point (access point, AP) side channel correction factor Beta based on a theoretical transpose relationship between an uplink channel and a downlink channel, to implement an equivalent downlink beamforming function. Details are not described herein again.

Based on a same technical concept, an embodiment of this application further provides a communication apparatus. A structure of the apparatus 500 is shown in FIG. 5, and the apparatus 500 includes a processing unit 501 and a transceiver unit 502. The communication apparatus 500 may be used as the network device or the terminal device in the communication system shown in FIG. 1, and may implement the foregoing embodiments and the power control method provided in the foregoing embodiments. The following describes functions of units in the apparatus 500.

In an example, when the communication apparatus is the first communication apparatus described in the foregoing embodiments, the transceiver unit 502 is configured to send measurement indication information to a second communication apparatus, and receive a channel quality measurement result fed back by the second communication apparatus, where the measurement indication information indicates the second communication apparatus to perform channel quality measurement on a channel between the communication device and the second communication apparatus, and each of the plurality of spatial streams occupies a plurality of subbands on the channel; and the channel quality measurement result includes subband measurement information of each subband on the channel; and the processing unit 501 is configured to selectively perform, based on the subband measurement information, power water filling on subbands occupied by the plurality of spatial streams.

In a possible design, the subband measurement information of each subband includes corresponding subband average signal-to-noise ratio information when each spatial stream occupies the subband; and the processing unit 501 is configured to: selectively perform, based on the subband average signal-to-noise ratio information, power water filling on the subbands occupied by the plurality of spatial streams.

In a possible design, the processing unit 501 is configured to: determine, based on the subband average signal-to-noise ratio information, a power adjustment value of each subband occupied by each spatial stream; for each subband occupied by each spatial stream, when the power adjustment value of the subband meets a preset adjustment condition, select the subband as a target subband on which the power water filling needs to be performed in the spatial stream; and perform power water filling on the target subband based on a target power adjustment value of the target subband.

In a possible design, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible design, for each subband occupied by each spatial stream, the power adjustment value of the subband is a difference between the subband average signal-to-noise ratio of the subband and a specified parameter value, where the specified parameter value is a sum of a minimum value of subband average signal-to-noise ratios of the subbands occupied by the plurality of spatial streams and a preset constant value, and the preset constant value is an empirical value or a simulated value obtained based on a condition number; and the adjustment condition includes: The power adjustment value of the subband is greater than 0.

In a possible design, a target power adjustment value of each target subband is less than or equal to an adjustment threshold, and the adjustment threshold is an upper limit of a power adjustment value of a subband, where the channel quality measurement result further includes: the adjustment threshold; or a maximum received signal strength RSSI, where the maximum RSSI is a power value of an antenna that is of the second communication apparatus and that has a maximum RSSI, and the adjustment threshold is a difference between the maximum RSSI and a preset RSSI threshold.

In a possible design, the RSSI threshold is an RSSI corresponding to an error vector magnitude EVM inflection point of the second communication apparatus, where the RSSI corresponding to the EVM inflection point of the second communication apparatus is obtained by the first communication apparatus through estimation; or the channel quality measurement result further includes the RSSI corresponding to the EVM inflection point of the second communication apparatus.

In a possible design, the subband measurement information of each subband includes a corresponding power adjustment value when each spatial stream occupies the subband, a target power adjustment value of a target subband that is selected by the second communication apparatus and on which the power water filling needs to be performed in the spatial stream is greater than 0, and a power adjustment value of a subband other than the target subband is equal to 0; and the processing unit 501 is configured to: perform power water filling on the target subband based on the target power adjustment value of the target subband.

In a possible design, the channel quality measurement result further includes a stream average signal-to-noise ratio estimated value of each spatial stream, and the stream average signal-to-noise ratio estimated value is a corresponding stream average signal-to-noise ratio that is estimated by the second communication apparatus and that is obtained after the first communication apparatus performs power water filling on the target subband based on the target power adjustment value; and the processing unit is further configured to: perform modulation and coding scheme MCS scheduling based on the stream average signal-to-noise ratio estimated value.

In a possible design, a first power value of the target subband before the power water filling is greater than a second power value of the target subband after the power water filling.

In a possible design, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier; and the processing unit 501 is configured to: selectively perform, during precoding processing based on the subband measurement information and the weighting vector of the subcarrier, power water filling on the subbands occupied by the plurality of spatial streams.

In a possible design, the measurement indication information is located in a high efficient signaling field in the measurement frame; and the measurement indication information further indicates different subband widths by setting different values in corresponding bits of the high efficient signaling field.

In another example, when the communication apparatus is the second communication apparatus described in the foregoing embodiments, the transceiver unit 502 is configured to receive measurement indication information from a first communication apparatus; and the processing unit 501 is configured to perform channel quality measurement on a channel between the first communication apparatus and the communication device based on the measurement indication information, to obtain subband measurement information of each subband on the channel, where each of the plurality of spatial streams occupies a plurality of subbands on the channel, where the transceiver unit 502 is further configured to send a channel quality measurement result to the first communication apparatus, where the channel quality measurement result includes the subband measurement information, and the subband measurement information is used to enable the first communication apparatus to selectively perform power water filling on subbands occupied by the plurality of spatial streams.

In a possible design, the subband measurement information of each subband includes corresponding subband average signal-to-noise ratio information when each spatial stream occupies the subband.

In a possible design, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible design, the channel quality measurement result further includes: an adjustment threshold, where the adjustment threshold is an upper limit of a power adjustment value of a subband; or a maximum received signal strength RSSI, where the maximum RSSI is a power value of an antenna that is of the second communication apparatus and that has a maximum RSSI, and the maximum RSSI is used to determine an adjustment threshold.

In a possible design, the channel quality measurement result further includes an RSSI corresponding to an error vector magnitude EVM inflection point of the second communication apparatus.

In a possible design, the subband measurement information of each subband included in the channel quality measurement result includes a corresponding power adjustment value when each spatial stream occupies the subband, a target power adjustment value of a target subband that is selected by the second communication apparatus and on which the power water filling needs to be performed in the spatial stream is greater than 0 and less than or equal to an adjustment threshold, and a power adjustment value of a subband other than the target subband is equal to 0.

In a possible design, the subband measurement information of each subband obtained through measurement includes corresponding subband average signal-to-noise ratio information when each spatial stream occupies the subband; and the processing unit 501 is further configured to: determine, based on the subband average signal-to-noise ratio information, a power adjustment value of each subband occupied by each spatial stream, where for each subband occupied by each spatial stream, the power adjustment value of the subband is a difference between a subband average signal-to-noise ratio of the subband and a specified parameter value, the specified parameter value is a sum of a minimum value of subband average signal-to-noise ratios of the subbands occupied by the plurality of spatial streams and a preset constant value, and the preset constant value is an empirical value or a simulated value obtained based on a condition number; and for each subband occupied by each spatial stream, when the power adjustment value of the subband meets a preset adjustment condition, select the subband as a target subband on which the power water filling needs to be performed in the spatial stream, where the adjustment condition includes: The power adjustment value of the subband is greater than 0.

In a possible design, the channel quality measurement result further includes a stream average signal-to-noise ratio estimated value of each spatial stream, and the stream average signal-to-noise ratio estimated value is used for the first communication apparatus to perform modulation and coding scheme MCS scheduling; and the stream average signal-to-noise ratio estimated value is a corresponding stream average signal-to-noise ratio that is estimated by the second communication apparatus and that is obtained after the first communication apparatus performs power water filling on the target subband based on the target power adjustment value.

In a possible design, a first power value of the target subband before the power water filling is greater than a second power value of the target subband after the power water filling.

In a possible design, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier.

In a possible design, the measurement indication information is located in a high efficient signaling field in the measurement frame; and the measurement indication information further indicates different subband widths by setting different values in corresponding bits of the high efficient signaling field.

It should be understood that the processing unit 501 involved in the communication apparatus may be implemented as a processor or a processor-related circuit component, and the transceiver unit 502 may be implemented as a transceiver or a transceiver-related circuit component. Operations and/or functions of various units in the communication apparatus are separately used to implement corresponding processes of the method shown in FIG. 2. For brevity, details are not described herein again.

Based on a same technical concept, this application further provides a communication device. The communication device may be used as the network device or the terminal device in the communication system shown in FIG. 1, may implement the foregoing embodiments and the method provided in the embodiments, and has the function of the communication apparatus shown in FIG. 6. Referring to FIG. 6, the communication device 600 includes: a memory 601, a processor 602, and a transceiver 603. The memory 601, the processor 602, and the transceiver 603 are connected to each other.

Optionally, the memory 601, the processor 602, and the transceiver 603 are connected to each other through a bus 604, the memory 601 is configured to store program code, and the processor 602 may obtain the program code from the memory 601 and perform corresponding processing. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by using only one bold line in FIG. 6. However, it does not indicate that there is only one bus or only one type of bus.

In an example, when the communication device 600 is implemented as the first communication apparatus, the transceiver 603 is configured to send measurement indication information to a second communication apparatus, and receive a channel quality measurement result fed back by the second communication apparatus, where the measurement indication information indicates the second communication apparatus to perform channel quality measurement on a channel between the communication device and the second communication apparatus, and each of the plurality of spatial streams occupies a plurality of subbands on the channel; and the channel quality measurement result includes subband measurement information of each subband on the channel; and the processor 602 is coupled to the transceiver 603 and is configured to selectively perform, based on the subband measurement information, power water filling on subbands occupied by the plurality of spatial streams.

In a possible design, the subband measurement information of each subband includes corresponding subband average signal-to-noise ratio information when each spatial stream occupies the subband; and the processor 602 is configured to: selectively perform, based on the subband average signal-to-noise ratio information, power water filling on the subbands occupied by the plurality of spatial streams.

In a possible design, the processor 602 is configured to: determine, based on the subband average signal-to-noise ratio information, a power adjustment value of each subband occupied by each spatial stream; for each subband occupied by each spatial stream, when the power adjustment value of the subband meets a preset adjustment condition, select the subband as a target subband on which the power water filling needs to be performed in the spatial stream; and perform power water filling on the target subband based on a target power adjustment value of the target subband.

In a possible design, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible design, for each subband occupied by each spatial stream, the power adjustment value of the subband is a difference between the subband average signal-to-noise ratio of the subband and a specified parameter value, where the specified parameter value is a sum of a minimum value of subband average signal-to-noise ratios of the subbands occupied by the plurality of spatial streams and a preset constant value, and the preset constant value is an empirical value or a simulated value obtained based on a condition number; and the adjustment condition includes: The power adjustment value of the subband is greater than 0.

In a possible design, a target power adjustment value of each target subband is less than or equal to an adjustment threshold, and the adjustment threshold is an upper limit of a power adjustment value of a subband, where the channel quality measurement result further includes: the adjustment threshold; or a maximum received signal strength RSSI, where the maximum RSSI is a power value of an antenna that is of the second communication apparatus and that has a maximum RSSI, and the adjustment threshold is a difference between the maximum RSSI and a preset RSSI threshold.

In a possible design, the RSSI threshold is an RSSI corresponding to an error vector magnitude EVM inflection point of the second communication apparatus, where the RSSI corresponding to the EVM inflection point of the second communication apparatus is obtained by the first communication apparatus through estimation; or the channel quality measurement result further includes the RSSI corresponding to the EVM inflection point of the second communication apparatus.

In a possible design, the subband measurement information of each subband includes a corresponding power adjustment value when each spatial stream occupies the subband, a target power adjustment value of a target subband that is selected by the second communication apparatus and on which the power water filling needs to be performed in the spatial stream is greater than 0, and a power adjustment value of a subband other than the target subband is equal to 0; and the processor 602 is configured to: perform power water filling on the target subband based on the target power adjustment value of the target subband.

In a possible design, the channel quality measurement result further includes a stream average signal-to-noise ratio estimated value of each spatial stream, and the stream average signal-to-noise ratio estimated value is a corresponding stream average signal-to-noise ratio that is estimated by the second communication apparatus and that is obtained after the first communication apparatus performs power water filling on the target subband based on the target power adjustment value; and the processor 601 is further configured to: perform modulation and coding scheme MCS scheduling based on the stream average signal-to-noise ratio estimated value.

In a possible design, a first power value of the target subband before the power water filling is greater than a second power value of the target subband after the power water filling.

In a possible design, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier; and the processor 602 is configured to: selectively perform, during precoding processing based on the subband measurement information and the weighting vector of the subcarrier, power water filling on the subbands occupied by the plurality of spatial streams.

In a possible design, the measurement indication information is located in a high efficient signaling field in the measurement frame; and the measurement indication information further indicates different subband widths by setting different values in corresponding bits of the high efficient signaling field.

In another example, when the communication device 600 is the second communication apparatus described in the foregoing embodiments, the transceiver 603 is configured to receive measurement indication information from a first communication apparatus; and the processor 602 is configured to perform channel quality measurement on a channel between the first communication apparatus and the communication device based on the measurement indication information, to obtain subband measurement information of each subband on the channel, where each of the plurality of spatial streams occupies a plurality of subbands on the channel, where the transceiver 603 is further configured to send a channel quality measurement result to the first communication apparatus, where the channel quality measurement result includes the subband measurement information, and the subband measurement information is used to enable the first communication apparatus to selectively perform power water filling on subbands occupied by the plurality of spatial streams.

In a possible design, the subband measurement information of each subband includes corresponding subband average signal-to-noise ratio information when each spatial stream occupies the subband.

In a possible design, the subband average signal-to-noise ratio information of each subband occupied by each spatial stream includes the following information of the subband in the spatial stream: a subband average signal-to-noise ratio; or a signal-to-noise ratio difference, where the signal-to-noise ratio difference is a difference between a signal-to-noise ratio of the subband in the spatial stream and a stream average signal-to-noise ratio of the spatial stream; and the channel quality measurement result further includes a stream average signal-to-noise ratio of each spatial stream.

In a possible design, the channel quality measurement result further includes: an adjustment threshold, where the adjustment threshold is an upper limit of a power adjustment value of a subband; or a maximum received signal strength RSSI, where the maximum RSSI is a power value of an antenna that is of the second communication apparatus and that has a maximum RSSI, and the maximum RSSI is used to determine an adjustment threshold.

In a possible design, the channel quality measurement result further includes an RSSI corresponding to an error vector magnitude EVM inflection point of the second communication apparatus.

In a possible design, the subband measurement information of each subband included in the channel quality measurement result includes a corresponding power adjustment value when each spatial stream occupies the subband, a target power adjustment value of a target subband that is selected by the second communication apparatus and on which the power water filling needs to be performed in the spatial stream is greater than 0 and less than or equal to an adjustment threshold, and a power adjustment value of a subband other than the target subband is equal to 0.

In a possible design, the subband measurement information of each subband obtained through measurement includes corresponding subband average signal-to-noise ratio information when each spatial stream occupies the subband; and the processor 602 is further configured to: determine, based on the subband average signal-to-noise ratio information, a power adjustment value of each subband occupied by each spatial stream, where for each subband occupied by each spatial stream, the power adjustment value of the subband is a difference between a subband average signal-to-noise ratio of the subband and a specified parameter value, the specified parameter value is a sum of a minimum value of subband average signal-to-noise ratios of the subbands occupied by the plurality of spatial streams and a preset constant value, and the preset constant value is an empirical value or a simulated value obtained based on a condition number; and for each subband occupied by each spatial stream, when the power adjustment value of the subband meets a preset adjustment condition, select the subband as a target subband on which the power water filling needs to be performed in the spatial stream, where the adjustment condition includes: The power adjustment value of the subband is greater than 0.

In a possible design, the channel quality measurement result further includes a stream average signal-to-noise ratio estimated value of each spatial stream, and the stream average signal-to-noise ratio estimated value is used for the first communication apparatus to perform modulation and coding scheme MCS scheduling; and the stream average signal-to-noise ratio estimated value is a corresponding stream average signal-to-noise ratio that is estimated by the second communication apparatus and that is obtained after the first communication apparatus performs power water filling on the target subband based on the target power adjustment value.

In a possible design, a first power value of the target subband before the power water filling is greater than a second power value of the target subband after the power water filling.

In a possible design, the measurement indication information and the channel quality measurement result are transmitted when a beamforming TxBF technology is used, the measurement indication information is carried in a measurement frame sent by the first communication apparatus, the channel quality measurement performed by the second communication apparatus on the channel includes channel estimation measurement, the channel quality measurement result is carried in a response frame fed back by the second communication apparatus in response to the measurement frame, and the channel quality measurement result further includes a weighting vector of a subcarrier.

In a possible design, the measurement indication information is located in a high efficient signaling field in the measurement frame; and the measurement indication information further indicates different subband widths by setting different values in corresponding bits of the high efficient signaling field.

It may be understood that the memory 601 is configured to store program instructions, data, and the like. Specifically, the program instructions may include program code. The program code includes computer operation instructions. The memory 601 may include a random access memory (random access memory, RAM), and may further include a non-volatile memory (non-volatile memory), for example, at least one magnetic disk memory. The processor 602 executes the program instructions stored in the memory 601, and implements the foregoing functions by using the data stored in the memory 901, to implement the Wi-Fi communication method provided in the foregoing embodiments.

It may be understood that the memory 601 in FIG. 6 in this application may be a volatile memory or a non-volatile memory, or may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and method described in this specification includes, but not limited to, these memories and any memory of another proper type.

Based on the foregoing embodiments, an embodiment of this application further provides a computer program. When the computer program runs on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any available medium that can be accessed by the computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can be for carrying or storing expected program code in a form of instructions or a data structure and can be accessed by the computer

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions of a service device, a forwarding device, or a station device according to the foregoing embodiments. In a possible design, the chip system further includes a memory. The memory is configured to store a program and data that are necessary for the computer apparatus. The chip system may include a chip, or may include a chip and another discrete component.

In conclusion, embodiments of this application provide a power control method, and a communication device and system. The solution may be applied to a communication system that supports transmission of a plurality of spatial streams The communication system may be a MIMO system in which a modulation and coding scheme of each spatial stream is the same. The communication system may include a first communication apparatus and a second communication apparatus. Each of the plurality of spatial streams occupies a plurality of subbands on a channel between the first communication apparatus and the second communication apparatus. The subbands may be obtained by dividing a bandwidth of the channel based on a predetermined subband width. The first communication apparatus may be used as a transmit end, and the second communication apparatus may be used as a receive end. The first communication apparatus can send measurement indication information to the second communication apparatus, to indicate the second communication apparatus to perform channel quality measurement on the channel between the first communication apparatus and the second communication apparatus. Correspondingly, the first communication apparatus can receive a channel quality measurement result fed back by the second communication apparatus. The channel quality measurement result may include subband measurement information of each subband on the channel. Further, the first communication apparatus can selectively perform, based on the subband measurement information, power water filling on subbands occupied by the plurality of spatial streams. In embodiments of this application, performing power water filling on the subband means that power of the subband is reduced. A first power value represents power of a target subband on which the power water filling needs to be performed before power water filling processing, and a second power value represents power of the target subband after the power water filling processing. Through the power water filling, the second power value is less than the first power value.

Therefore, power control on some subbands (for example, some subbands with strong received signal strength) occupied by each spatial stream can be selectively implemented, based on a subband granularity, so that a difference of signal strength of each spatial stream received by the second communication apparatus at different locations in a bandwidth is reduced, and a problem that demodulation is difficult caused by obvious signal fading at some frequencies due to frequency selectivity caused by a multipath channel is avoided as much as possible, to ensure demodulation performance of the second communication apparatus as the receive end. Based on this solution, for example, during near strong field communication, power of a strong subband may be appropriately reduced, so that when receiving a transmit signal of the first communication apparatus and performing AGC processing, the second communication apparatus at the peer end relatively increases an LNA range, to reduce a noise factor of the second communication apparatus, and increase signal-to-noise ratios of some subbands with weak received signal strength, so as to enhance a demodulation capability of the second communication apparatus.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application.

**Claims**

1. A power control method, applied to a first communication apparatus that supports transmission of a plurality of spatial streams, wherein the method comprises:

sending (S210) measurement indication information to a second communication apparatus, to indicate the second communication apparatus to perform channel quality measurement on a channel between the first communication apparatus and the second communication apparatus, wherein each of the plurality of spatial streams occupies a plurality of subbands on the channel;
receiving (S220) a channel quality measurement result fed back by the second communication apparatus, wherein the channel quality measurement result comprises subband measurement information of each subband on the channel; and
selectively performing (S230), based on the subband measurement information, power water filling on subbands occupied by the plurality of spatial streams,
wherein the subband measurement information of each subband comprises corresponding subband average signal-to-noise ratio information when each spatial stream occupies the subband; and the selectively performing, based on the subband measurement information, power water filling on subbands occupied by the plurality of spatial streams comprises:

selectively performing, based on the subband average signal-to-noise ratio information, power water filling on the subbands occupied by the plurality of spatial streams,
wherein the selectively performing, based on the subband average signal-to-noise ratio information, power water filling on the subbands occupied by the plurality of spatial streams comprises:

determining, based on the subband average signal-to-noise ratio information, a power adjustment value of each subband occupied by each spatial stream;
for each subband occupied by each spatial stream, when the power adjustment value of the subband meets a preset adjustment condition, selecting the subband as a target subband on which the power water filling needs to be performed in the spatial stream; and
performing power water filling on the target subband based on a target power adjustment value of the target subband,
**characterized in that**
a target power adjustment value of each target subband is less than or equal to an adjustment threshold, and the adjustment threshold is an upper limit of a power adjustment value of a subband; and
the channel quality measurement result further comprises:

the adjustment threshold; or
a maximum received signal strength RSSI, wherein the maximum RSSI is a power value of an antenna that is of the second communication apparatus and that has a maximum RSSI, and the adjustment threshold is a difference between the maximum RSSI and a preset RSSI threshold, wherein the RSSI threshold is an RSSI corresponding to an error vector magnitude EVM inflection point of the second communication apparatus, wherein
the RSSI corresponding to the EVM inflection point of the second communication apparatus is obtained by the first communication apparatus through estimation; or the channel quality measurement result further comprises the RSSI corresponding to the EVM inflection point of the second communication apparatus.

2. The method according to claim 1, wherein the subband average signal-to-noise ratio information of each subband occupied by each spatial stream comprises the following information of the subband in the spatial stream:

a subband average signal-to-noise ratio; or
a signal-to-noise ratio difference, wherein the signal-to-noise ratio difference is a difference between a signal-to-noise ratio of the subband in the spatial stream and a stream average signal-to-noise ratio of the spatial stream; and the channel quality measurement result further comprises a stream average signal-to-noise ratio of each spatial stream.

3.  The method according to claim 2, wherein for each subband occupied by each spatial stream, the power adjustment value of the subband is a difference between the subband average signal-to-noise ratio of the subband and a specified parameter value, wherein the specified parameter value is a sum of a minimum value of subband average signal-to-noise ratios of the subbands occupied by the plurality of spatial streams and a preset constant value, and the preset constant value is an empirical value or a simulated value obtained based on a condition number; and the adjustment condition comprises: the power adjustment value of the subband is greater than 0.

4.  The method according to claim 1, wherein the subband measurement information of each subband comprises a corresponding power adjustment value when each spatial stream occupies the subband, a target power adjustment value of a target subband that is selected by the second communication apparatus and on which the power water filling needs to be performed in the spatial stream is greater than 0, and a power adjustment value of a subband other than the target subband is equal to 0; and

    the selectively performing, based on the subband measurement information, power water filling on subbands occupied by the plurality of spatial streams comprises:
    performing power water filling on the target subband based on the target power adjustment value of the target subband.

5.  The method according to claim 2, wherein the channel quality measurement result further comprises a stream average signal-to-noise ratio estimated value of each spatial stream, and the stream average signal-to-noise ratio estimated value is a corresponding stream average signal-to-noise ratio that is estimated by the second communication apparatus and that is obtained after the first communication apparatus performs power water filling on the target subband based on the target power adjustment value; and the method further comprises:
    performing modulation and coding scheme MCS scheduling based on the stream average signal-to-noise ratio estimated value.

6.  The method according to any one of claims 1 to 5, wherein a first power value of the target subband before the power water filling is greater than a second power value of the target subband after the power water filling.

7.  The method according to any one of claims 1 to 6, wherein the measurement indication information and the channel quality measurement result are transmitted when a beamforming TxBF technology is used, the measurement indication information is carried in a measurement frame sent by the first communication apparatus, the channel quality measurement performed by the second communication apparatus on the channel comprises channel estimation measurement, the channel quality measurement result is carried in a response frame fed back by the second communication apparatus in response to the measurement frame, and the channel quality measurement result further comprises a weighting vector of a subcarrier; and

    the selectively performing, based on the subband measurement information, power water filling on subbands occupied by the plurality of spatial streams comprises:
    selectively performing, during precoding processing based on the subband measurement information and the weighting vector of the subcarrier, power water filling on the subbands occupied by the plurality of spatial streams.

8.  The method according to claim 7, wherein the measurement indication information is located in a high efficient signaling field in the measurement frame; and the measurement indication information further indicates different subband widths by setting different values in corresponding bits of the high efficient signaling field.

9.  A power control method, applied to a second communication apparatus that supports transmission of a plurality of spatial streams, wherein the method comprises:

    receiving measurement indication information from a first communication apparatus;
    performing channel quality measurement on a channel between the first communication apparatus and the second communication apparatus based on the measurement indication information, to obtain subband measurement information of each subband on the channel, wherein each of the plurality of spatial streams occupies a plurality of subbands on the channel; and
    sending a channel quality measurement result to the first communication apparatus, wherein the channel quality measurement result comprises the subband measurement information, and the subband measurement information is used to enable the first communication apparatus to selectively perform power water filling on subbands occupied by the plurality of spatial streams,

wherein the subband measurement information of each subband comprises corresponding subband average signal-to-noise ratio information when each spatial stream occupies the subband,
wherein the channel quality measurement result further comprises:

an adjustment threshold, wherein the adjustment threshold is an upper limit of a power adjustment value of a subband; or
a maximum received signal strength RSSI, wherein the maximum RSSI is a power value of an antenna that is of the second communication apparatus and that has a maximum RSSI, and the maximum RSSI is used to determine an adjustment threshold,
wherein the channel quality measurement result further comprises an RSSI corresponding to an error vector magnitude EVM inflection point of the second communication apparatus.

10. A communication device (600), wherein the communication device supports transmission of a plurality of spatial streams, and the communication device comprises:

a transceiver (603), configured to send measurement indication information to a second communication apparatus, and receive a channel quality measurement result fed back by the second communication apparatus, wherein the measurement indication information indicates the second communication apparatus to perform channel quality measurement on a channel between the communication device and the second communication apparatus, and each of the plurality of spatial streams occupies a plurality of subbands on the channel; and the channel quality measurement result comprises subband measurement information of each subband on the channel; and
a processor (602), coupled to the transceiver and configured to selectively perform, based on the subband measurement information, power water filling on subbands occupied by the plurality of spatial streams,
wherein the subband measurement information of each subband comprises corresponding subband average signal-to-noise ratio information when each spatial stream occupies the subband; and the selectively performing, based on the subband measurement information, power water filling on subbands occupied by the plurality of spatial streams comprises:

selectively performing, based on the subband average signal-to-noise ratio information, power water filling on the subbands occupied by the plurality of spatial streams,
wherein the selectively performing, based on the subband average signal-to-noise ratio information, power water filling on the subbands occupied by the plurality of spatial streams comprises:

determining, based on the subband average signal-to-noise ratio information, a power adjustment value of each subband occupied by each spatial stream;
for each subband occupied by each spatial stream, when the power adjustment value of the subband meets a preset adjustment condition, selecting the subband as a target subband on which the power water filling needs to be performed in the spatial stream; and
performing power water filling on the target subband based on a target power adjustment value of the target subband,
a target power adjustment value of each target subband is less than or equal to an adjustment threshold, and the adjustment threshold is an upper limit of a power adjustment value of a subband; and
the channel quality measurement result further comprises:

the adjustment threshold; or
a maximum received signal strength RSSI, wherein the maximum RSSI is a power value of an antenna that is of the second communication apparatus and that has a maximum RSSI, and the adjustment threshold is a difference between the maximum RSSI and a preset RSSI threshold,
wherein the RSSI threshold is an RSSI corresponding to an error vector magnitude EVM inflection point of the second communication apparatus, wherein
the RSSI corresponding to the EVM inflection point of the second communication apparatus is obtained by the first communication apparatus through estimation; or the channel quality measurement result further comprises the RSSI corresponding to the EVM inflection point of the second communication apparatus.

11. A computer-readable storage medium, wherein the computer-readable storage medium stores a computer program; and when the computer program is run on a computer, the computer is enabled to perform the method according to any one of claims 1 to 8 or the method according to claim 9 or 10.

12. A computer program product, wherein when the computer program product is run on a computer, the computer is enabled to perform the method according to any one of claims 1 to 8 or the method according to claim 9 or 10.

**Patentansprüche**

1. Leistungssteuerungsverfahren, das auf eine erste Kommunikationseinrichtung angewendet wird, welche eine Übertragung einer Vielzahl von räumlichen Strömen unterstützt, wobei das Verfahren Folgendes umfasst:

Senden (S210) von Messanzeigeinformationen an eine zweite Kommunikationseinrichtung, um der zweiten Kommunikationseinrichtung anzuzeigen, eine Kanalqualitätsmessung auf einem Kanal zwischen der ersten Kommunikationseinrichtung und der zweiten Kommunikationseinrichtung durchzuführen, wobei jeder der Vielzahl von räumlichen Strömen eine Vielzahl von Teilbändern auf dem Kanal belegt;
Empfangen (S220) eines Kanalqualitätsmessergebnisses, das durch die zweite Kommunikationseinrichtung zurückgemeldet wird, wobei das Kanalqualitätsmessergebnis Teilbandmessinformationen jedes Teilbandes auf dem Kanal umfasst; und
selektives Durchführen (S230), basierend auf den Teilbandmessinformationen, eines Leistungs-Water-Filling auf den Teilbändern, die durch die Vielzahl von räumlichen Strömen belegt sind,
wobei die Teilbandmessinformationen jedes Teilbandes entsprechende Informationen über das durchschnittliche Signalrauschverhältnis des Teilbandes umfassen, wenn jeder räumliche Strom das Teilband belegt; und
das selektive Durchführen, basierend auf den Teilbandmessinformationen, des Leistungs-Water-Filling auf den Teilbändern, die durch die Vielzahl von räumlichen Strömen belegt sind, Folgendes umfasst:

selektives Durchführen, basierend auf den Informationen über das durchschnittliche Signalrauschverhältnis des Teilbandes, des Leistungs-Water-Filling auf den Teilbändern, die durch die Vielzahl von räumlichen Strömen belegt sind,
wobei das selektive Durchführen, basierend auf den Informationen über das durchschnittliche Signalrauschverhältnis des Teilbandes, des Leistungs-Water-Filling auf den Teilbändern, die durch die Vielzahl von räumlichen Strömen belegt sind, Folgendes umfasst:

Bestimmen, basierend auf den Informationen über das durchschnittliche Signalrauschverhältnis des Teilbandes, eines Leistungsanpassungswerts jedes Teilbandes, das durch jeden räumlichen Strom belegt ist;
für jedes Teilband, das durch jeden räumlichen Strom belegt ist, wenn der Leistungsanpassungswert des Teilbandes eine voreingestellte Anpassungsbedingung erfüllt, Auswählen des Teilbandes als ein Zielteilband, auf dem das Leistungs-Water-Filling in dem räumlichen Strom durchgeführt werden muss; und
Durchführen eines Leistungs-Water-Filling auf dem Zielteilband basierend auf einem Zielleistungsanpassungswert des Zielteilbandes,
**dadurch gekennzeichnet, dass**
ein Zielleistungsanpassungswert jedes Zielteilbandes kleiner oder gleich einer Anpassungsschwelle ist und die Anpassungsschwelle eine obere Grenze eines Leistungsanpassungswerts eines Teilbandes ist; und
das Kanalqualitätsmessergebnis ferner Folgendes umfasst:

die Anpassungsschwelle; oder
eine maximale Empfangssignalstärke RSSI, wobei die maximale RSSI ein Leistungswert einer Antenne ist, die zu der zweiten Kommunikationseinrichtung gehört und die eine maximale RSSI aufweist, und die Anpassungsschwelle eine Differenz zwischen der maximalen RSSI und einer voreingestellten RSSI - Schwelle ist,
wobei die RSSI-Schwelle eine RSSI ist, die einem Fehlervektorgrößen-EVM-Wendepunkt der zweiten Kommunikationseinrichtung entspricht, wobei
die RSSI, die dem EVM-Wendepunkt der zweiten Kommunikationseinrichtung entspricht, mittels Schätzung durch die erste Kommunikationseinrichtung erlangt wird; oder das Kanalqualitätsmessergebnis ferner die RSSI, die dem EVM-Wendepunkt der zweiten Kommunikationseinrichtung entspricht, umfasst.

**2.** Verfahren nach Anspruch 1, wobei die Informationen über das durchschnittliche Signalrauschverhältnis des Teilbandes für jedes Teilband, das durch jeden räumlichen Strom belegt ist, die folgenden Informationen des Teilbandes in dem räumlichen Strom umfassen:

ein durchschnittliches Signalrauschverhältnis des Teilbandes; oder
eine Signalrauschverhältnisdifferenz, wobei die Signalrauschverhältnisdifferenz eine Differenz zwischen einem Signalrauschverhältnis des Teilbandes in dem räumlichen Strom und einem durchschnittlichen Signalrauschverhältnis des Stromes für den räumlichen Strom ist; und das Kanalqualitätsmessergebnis ferner ein durchschnittliches Signalrauschverhältnis des Stromes für jeden räumlichen Strom umfasst.

**3.** Verfahren nach Anspruch 2, wobei für jedes Teilband, das durch jeden räumlichen Strom belegt ist, der Leistungsanpassungswert des Teilbandes eine Differenz zwischen dem durchschnittlichen Signalrauschverhältnis des Teilbandes für das Teilband und einem vorgegebenen Parameterwert ist, wobei der definierte Parameterwert eine Summe eines Minimalwertes von durchschnittlichen Signalrauschverhältnissen des Teilbandes für die Teilbänder ist, die durch die Vielzahl von räumlichen Strömen belegt sind, und eines voreingestellten konstanten Wertes ist und der voreingestellte konstante Wert ein empirischer Wert oder ein simulierter Wert ist, der basierend auf einer Bedingungszahl erlangt wird; und die Anpassungsbedingung Folgendes umfasst: der Leistungsanpassungswert des Teilbandes ist größer als 0.

**4.** Verfahren nach Anspruch 1, wobei die Teilbandmessinformationen jedes Teilbandes einen entsprechenden Leistungsanpassungswert umfassen, wenn jeder räumliche Strom das Teilband belegt, ein Zielleistungsanpassungswert eines Zielteilbandes, das durch die zweite Kommunikationseinrichtung ausgewählt wird und auf dem das Leistungs-Water-Filling in dem räumlichen Strom durchgeführt werden muss, größer als 0 ist, und ein Leistungsanpassungswert eines anderen Teilbandes als das Zielteilband gleich 0 ist; und
das selektive Durchführen, basierend auf den Teilbandmessinformationen, des Leistungs-Water-Filling auf den Teilbändern, die durch die Vielzahl von räumlichen Strömen belegt sind, Folgendes umfasst:
Durchführen des Leistungs-Water-Filling auf dem Zielteilband basierend auf dem Zielleistungsanpassungswert des Zielteilbandes.

**5.** Verfahren nach Anspruch 2, wobei das Kanalqualitätsmessergebnis ferner einen durchschnittlichen Signalrauschverhältnis-Schätzwert des Stromes für jeden räumlichen Strom umfasst und der durchschnittliche Signalrauschverhältnis-Schätzwert des Stromes ein entsprechendes durchschnittliches Signalrauschverhältnis des Stromes ist, das durch die zweite Kommunikationseinrichtung geschätzt wird und das erlangt wird, nachdem die erste Kommunikationseinrichtung das Leistungs-Water-Filling auf dem Zielteilband basierend auf dem Zielleistungsanpassungswert durchführt; und das Verfahren ferner Folgendes umfasst:
Durchführen einer Modulations- und Codierungsschema-Planung, MCS-Planung, basierend auf dem durchschnittlichen Signalrauschverhältnis-Schätzwert des Stromes.

**6.** Verfahren nach einem der Ansprüche 1 bis 5, wobei ein erster Leistungswert des Zielteilbandes vor dem Leistungs-Water-Filling größer als ein zweiter Leistungswert des Zielteilbandes nach dem Leistungs-Water-Filling ist.

**7.** Verfahren nach einem der Ansprüche 1 bis 6, wobei die Messanzeigeinformationen und das Kanalqualitätsmessergebnis übertragen werden, wenn eine Strahlformungs-TxBF-Technologie verwendet wird, die Messanzeigeinformationen in einem Messrahmen getragen werden, der durch die erste Kommunikationseinrichtung gesendet wird, die Kanalqualitätsmessung, die durch die zweite Kommunikationseinrichtung auf dem Kanal durchgeführt wird, eine Kanalschätzungsmessung umfasst, das Kanalqualitätsmessergebnis in einem Antwortrahmen getragen wird, der durch die zweite Kommunikationseinrichtung als Reaktion auf den Messrahmen zurückgemeldet wird, und das Kanalqualitätsmessergebnis ferner einen Gewichtungsvektor eines Unterträgers umfasst; und
das selektive Durchführen, basierend auf den Teilbandmessinformationen, des Leistungs-Water-Filling auf den Teilbändern, die durch die Vielzahl von räumlichen Strömen belegt sind, Folgendes umfasst:
selektives Durchführen, während der Vorcodierungsverarbeitung basierend auf den Teilbandmessinformationen und dem Gewichtungsvektor des Unterträgers, des Leistungs-Water-Filling auf den Teilbändern, die durch die Vielzahl von räumlichen Strömen belegt sind.

**8.** Verfahren nach Anspruch 7, wobei sich die Messanzeigeinformationen in einem hocheffizienten Signalfeld in dem Messrahmen befinden; und die Messanzeigeinformationen ferner unterschiedliche Teilbandbreiten durch Einstellen unterschiedlicher Werte in entsprechenden Bits des hocheffizienten Signalfeldes anzeigen.

9. Leistungssteuerungsverfahren, das auf eine zweite Kommunikationsvorrichtung angewendet wird, welche eine Übertragung einer Vielzahl von räumlichen Strömen unterstützt, wobei das Verfahren Folgendes umfasst:

Empfangen von Messanzeigeinformationen von einer ersten Kommunikationseinrichtung;

Durchführen einer Kanalqualitätsmessung auf einem Kanal zwischen der ersten Kommunikationseinrichtung und der zweiten Kommunikationseinrichtung basierend auf den Messanzeigeinformationen, um Teilbandmessinformationen für jedes Teilband auf dem Kanal zu erlangen, wobei jeder der Vielzahl von räumlichen Strömen eine Vielzahl von Teilbändern auf dem Kanal belegt; und

Senden eines Kanalqualitätsmessergebnisses an die erste Kommunikationseinrichtung, wobei das Kanalqualitätsmessergebnis die Teilbandmessinformationen umfasst und die Teilbandmessinformationen verwendet werden, um es der ersten Kommunikationseinrichtung zu ermöglichen, selektiv ein Leistungs-Water-Filling auf den Teilbändern, die durch die Vielzahl von räumlichen Strömen belegt sind, durchzuführen,

wobei die Teilbandmessinformationen jedes Teilbandes entsprechende Informationen über das durchschnittliche Signalrauschverhältnis des Teilbandes umfassen, wenn jeder räumliche Strom das Teilband belegt,

wobei das Kanalqualitätsmessergebnis ferner Folgendes umfasst:

eine Anpassungsschwelle, wobei die Anpassungsschwelle eine obere Grenze eines Leistungsanpassungswerts eines Teilbandes ist; oder

eine maximale Empfangssignalstärke RSSI, wobei die maximale RSSI ein Leistungswert einer Antenne ist, die zu der zweiten Kommunikationseinrichtung gehört und die eine maximale RSSI aufweist, und die maximale RSSI verwendet wird, um eine Anpassungsschwelle zu bestimmen,

wobei das Kanalqualitätsmessergebnis ferner eine RSSI umfasst, die einem Fehlervektorgrößen-EVM-Wendepunkt der zweiten Kommunikationseinrichtung entspricht.

10. Kommunikationsvorrichtung (600), wobei die Kommunikationsvorrichtung eine Übertragung einer Vielzahl von räumlichen Strömen unterstützt und die Kommunikationsvorrichtung Folgendes umfasst:

einen Sendeempfänger (603), der dazu konfiguriert ist, Messanzeigeinformationen an eine zweite Kommunikationseinrichtung zu senden und ein Kanalqualitätsmessergebnis, das von der zweiten Kommunikationseinrichtung zurückgemeldet wird, zu empfangen, wobei die Messanzeigeinformationen der zweiten Kommunikationseinrichtung anzeigen, eine Kanalqualitätsmessung auf einem Kanal zwischen der Kommunikationseinrichtung und der zweiten Kommunikationseinrichtung durchzuführen, und jeder der Vielzahl von räumlichen Strömen eine Vielzahl von Teilbändern auf dem Kanal belegt; und das Kanalqualitätsmessergebnis Teilbandmessinformationen jedes Teilbandes auf dem Kanal umfasst; und

einen Prozessor (602), der mit dem Sendeempfänger gekoppelt ist und dazu konfiguriert ist, basierend auf den Teilbandmessinformationen selektiv ein Leistungs-Water-Filling auf den Teilbändern, die durch die Vielzahl von räumlichen Strömen belegt sind, durchzuführen,

wobei die Teilbandmessinformationen jedes Teilbandes entsprechende Informationen über das durchschnittliche Signalrauschverhältnis des Teilbandes umfassen, wenn jeder räumliche Strom das Teilband belegt; und das selektive Durchführen, basierend auf den Teilbandmessinformationen, des Leistungs-Water-Filling auf den Teilbändern, die durch die Vielzahl von räumlichen Strömen belegt sind, Folgendes umfasst:

selektives Durchführen, basierend auf den Informationen über das durchschnittliche Signalrauschverhältnis des Teilbandes,

des Leistungs-Water-Filling auf den Teilbändern, die durch die Vielzahl von räumlichen Strömen belegt sind, wobei das selektive Durchführen, basierend auf den Informationen über das durchschnittliche Signalrauschverhältnis des Teilbandes, des Leistungs-Water-Filling auf den Teilbändern, die durch die Vielzahl von räumlichen Strömen belegt sind, Folgendes umfasst:

Bestimmen, basierend auf den Informationen über das durchschnittliche Signalrauschverhältnis des Teilbandes, eines Leistungsanpassungswerts jedes Teilbandes, das durch jeden räumlichen Strom belegt ist;

für jedes Teilband, das durch jeden räumlichen Strom belegt ist, wenn der Leistungsanpassungswert des Teilbandes eine voreingestellte Anpassungsbedingung erfüllt, Auswählen des Teilbandes als ein Zielteilband, auf dem das Leistungs-Water-Filling in dem räumlichen Strom durchgeführt werden muss; und

Durchführen eines Leistungs-Water-Filling auf dem Zielteilband basierend auf einem Zielleistungsanpassungswert des Zielteilbandes,

ein Zielleistungsanpassungswert jedes Zielteilbandes kleiner oder gleich einer Anpassungsschwelle ist und die Anpassungsschwelle eine obere Grenze eines Leistungsanpassungswerts eines Teilbandes ist; und

das Kanalqualitätsmessergebnis ferner Folgendes umfasst:

die Anpassungsschwelle; oder

eine maximale Empfangssignalstärke RSSI, wobei die maximale RSSI ein Leistungswert einer Antenne ist, die zu der zweiten Kommunikationseinrichtung gehört und die eine maximale RSSI aufweist, und die Anpassungsschwelle eine Differenz zwischen der maximalen RSSI und einer voreingestellten RSSI - Schwelle ist,

wobei die RSSI-Schwelle eine RSSI ist, die einem Fehlervektorgrößen-EVM-Wendepunkt der zweiten Kommunikationseinrichtung entspricht, wobei

die RSSI, die dem EVM-Wendepunkt der zweiten Kommunikationseinrichtung entspricht, mittels Schätzung durch die erste Kommunikationseinrichtung erlangt wird; oder das Kanalqualitätsmessergebnis ferner die RSSI, die dem EVM-Wendepunkt der zweiten Kommunikationseinrichtung entspricht, umfasst.

11. Computerlesbares Speichermedium, wobei das computerlesbare Speichermedium ein Computerprogramm speichert; und wenn das Computerprogramm auf einem Computer ausgeführt wird, der Computer in die Lage versetzt wird, das Verfahren nach einem der Ansprüche 1 bis 8 oder das Verfahren nach Anspruch 9 oder 10 durchzuführen.

12. Computerprogrammprodukt, wobei, wenn das Computerprogrammprodukt auf einem Computer ausgeführt wird, der Computer in die Lage versetzt wird, das Verfahren nach einem der Ansprüche 1 bis 8 oder das Verfahren nach Anspruch 9 oder 10 durchzuführen.

**Revendications**

1. Procédé de commande de puissance, appliqué à un premier appareil de communication qui supporte la transmission d'une pluralité de flux spatiaux, dans lequel le procédé comprend :

l'envoi (S210) d'informations d'indication de mesure à un second appareil de communication, pour indiquer au second appareil de communication de réaliser une mesure de qualité de canal sur un canal entre le premier appareil de communication et le second appareil de communication, dans lequel chacun de la pluralité de flux spatiaux occupe une pluralité de sous-bandes sur le canal ;

la réception (S220) d'un résultat de mesure de qualité de canal renvoyé par le second appareil de communication, dans lequel le résultat de mesure de qualité de canal comprend des informations de mesure de sous-bande de chaque sous-bande sur le canal ; et

la réalisation sélective (S230), sur la base des informations de mesure de sous-bande, d'un remplissage en eau de puissance sur des sous-bandes occupées par la pluralité de flux spatiaux,

dans lequel les informations de mesure de sous-bande de chaque sous-bande comprennent des informations de rapport signal sur bruit moyen de sous-bande correspondantes lorsque chaque flux spatial occupe la sous-bande ; et la réalisation sélective, sur la base des informations de mesure de sous-bande, d'un remplissage en eau de puissance sur des sous-bandes occupées par la pluralité de flux spatiaux comprend :

la réalisation sélective, sur la base des informations de rapport signal sur bruit moyen de sous-bande, d'un remplissage en eau de puissance sur les sous-bandes occupées par la pluralité de flux spatiaux,

dans lequel la réalisation sélective, sur la base des informations de rapport signal sur bruit moyen de sous-bande, d'un remplissage en eau de puissance sur les sous-bandes occupées par la pluralité de flux spatiaux comprend :

la détermination, sur la base des informations de rapport signal sur bruit moyen de sous-bande, d'une valeur de réglage de puissance de chaque sous-bande occupée par chaque flux spatial ;

pour chaque sous-bande occupée par chaque flux spatial, lorsque la valeur de réglage de puissance de la sous-bande satisfait une condition de réglage prédéfinie, la sélection de la sous-bande comme sous-bande cible sur laquelle le remplissage en eau de puissance doit être réalisé dans le flux spatial ; et

la réalisation d'un remplissage en eau de puissance sur la sous-bande cible sur la base d'une valeur de réglage de puissance cible de la sous-bande cible,

**caractérisé en ce que**
une valeur de réglage de puissance cible de chaque sous-bande cible est inférieure ou égale à un seuil de réglage, et le seuil de réglage est une limite supérieure d'une valeur de réglage de puissance d'une sous-bande ; et
le résultat de mesure de qualité de canal comprend également :

le seuil de réglage ; ou
une intensité maximale de signal reçu RSSI, dans lequel la RSSI maximale est une valeur de puissance d'une antenne du second appareil de communication et présente une RSSI maximale, et le seuil de réglage est une différence entre la RSSI maximale et un seuil RSSI prédéfini,
dans lequel le seuil RSSI est une RSSI correspondant à un point d'inflexion EVM de grandeur vectorielle d'erreur du second appareil de communication, dans lequel
la RSSI correspondant au point d'inflexion EVM du second appareil de communication est obtenue par le premier appareil de communication par estimation ; ou le résultat de mesure de qualité de canal comprend également la RSSI correspondant au point d'inflexion EVM du second appareil de communication.

2. Procédé selon la revendication 1, dans lequel les informations de rapport signal sur bruit moyen de sous-bande de chaque sous-bande occupée par chaque flux spatial comprennent les informations suivantes de la sous-bande dans le flux spatial :

un rapport signal sur bruit moyen de sous-bande ; ou
une différence de rapport signal sur bruit, dans lequel la différence de rapport signal sur bruit est une différence entre un rapport signal sur bruit de la sous-bande dans le flux spatial et un rapport signal sur bruit moyen de flux du flux spatial ; et le résultat de mesure de qualité de canal comprend également un rapport signal sur bruit moyen de flux de chaque flux spatial.

3. Procédé selon la revendication 2, dans lequel, pour chaque sous-bande occupée par chaque flux spatial, la valeur de réglage de puissance de la sous-bande est une différence entre le rapport signal sur bruit moyen de sous-bande de la sous-bande et une valeur de paramètre spécifiée, dans lequel la valeur de paramètre spécifiée est une somme d'une valeur minimale de rapports signal sur bruit moyen de sous-bande des sous-bandes occupées par la pluralité de flux spatiaux et d'une valeur constante prédéterminée, et la valeur constante prédéterminée est une valeur empirique ou une valeur simulée obtenue sur la base d'un nombre de conditions ; et la condition de réglage comprend : la valeur de réglage de puissance de la sous-bande est supérieure à 0.

4. Procédé selon la revendication 1, dans lequel les informations de mesure de sous-bande de chaque sous-bande comprennent une valeur de réglage de puissance correspondante lorsque chaque flux spatial occupe la sous-bande, une valeur de réglage de puissance cible d'une sous-bande cible sélectionnée par le second appareil de communication et sur laquelle le remplissage en eau de puissance à réaliser dans le flux spatial est supérieur à 0, et une valeur de réglage de puissance d'une sous-bande autre que la sous-bande cible est égale à 0 ; et
la réalisation sélective, sur la base des informations de mesure de sous-bande, d'un remplissage en eau de puissance sur des sous-bandes occupées par la pluralité de flux spatiaux comprend :
la réalisation d'un remplissage en eau de puissance sur la sous-bande cible sur la base d'une valeur de réglage de puissance cible de la sous-bande cible.

5. Procédé selon la revendication 2, dans lequel le résultat de mesure de qualité de canal comprend également une valeur estimée de rapport signal sur bruit moyen de flux de chaque flux spatial, et la valeur estimée de rapport signal sur bruit moyen de flux est un rapport signal sur bruit moyen de flux correspondant qui est estimé par le second appareil de communication et qui est obtenu après que le premier appareil de communication a réalisé un remplissage en eau de puissance sur la sous-bande cible sur la base de la valeur de réglage de puissance cible ; et le procédé comprend également :
la réalisation d'une planification MCS de schéma de modulation et de codage sur la base de la valeur estimée du rapport signal sur bruit moyen de flux.

6. Procédé selon l'une quelconque des revendications 1 à 5, dans lequel une première valeur de puissance de la sous-bande cible avant remplissage en eau de puissance est supérieure à une seconde valeur de puissance de la sous-bande cible après remplissage en eau de puissance.

7.  Procédé selon l'une quelconque des revendications 1 à 6, dans lequel les informations d'indication de mesure et le résultat de mesure de qualité de canal sont transmis lorsqu'une technologie TxBF de formation de faisceau est utilisée, les informations d'indication de mesure sont portées dans une trame de mesure envoyée par le premier appareil de communication, la mesure de qualité de canal réalisée par le second appareil de communication sur le canal comprend une mesure d'estimation de canal, le résultat de mesure de qualité de canal est porté dans une trame de réponse renvoyée par le second appareil de communication en réponse à la trame de mesure, et le résultat de mesure de qualité de canal comprend également un vecteur de pondération d'une sous-porteuse ; et
    la réalisation sélective, sur la base des informations de mesure de sous-bande, d'un remplissage en eau de puissance sur des sous-bandes occupées par la pluralité de flux spatiaux comprend :
    la réalisation sélective, pendant le traitement de précodage sur la base des informations de mesure de sous-bande et du vecteur de pondération de la sous-porteuse, d'un remplissage en eau de puissance sur les sous-bandes occupées par la pluralité de flux spatiaux.

8.  Procédé selon la revendication 7, dans lequel les informations d'indication de mesure sont situées dans un champ de signalisation à haut rendement dans la trame de mesure ; et les informations d'indication de mesure indiquent également différentes largeurs de sous-bandes en réglant différentes valeurs dans des bits correspondants du champ de signalisation à haut rendement.

9.  Procédé de commande de puissance, appliqué à un second appareil de communication qui supporte la transmission d'une pluralité de flux spatiaux, dans lequel le procédé comprend :

    la réception d'informations d'indication de mesure d'un premier appareil de communication ;
    la réalisation d'une mesure de qualité de canal sur un canal entre le premier appareil de communication et le second appareil de communication sur la base des informations d'indication de mesure, pour obtenir des informations de mesure de sous-bande de chaque sous-bande sur le canal, dans lequel chacun de la pluralité de flux spatiaux occupe une pluralité de sous-bandes sur le canal ; et
    l'envoi d'un résultat de mesure de qualité de canal au premier appareil de communication, dans lequel le résultat de mesure de qualité de canal comprend les informations de mesure de sous-bande, et les informations de mesure de sous-bande sont utilisées pour permettre au premier appareil de communication de réaliser sélectivement un remplissage en eau de puissance sur des sous-bandes occupées par la pluralité de flux spatiaux,
    dans lequel les informations de mesure de sous-bande de chaque sous-bande comprennent des informations de rapport signal sur bruit moyen de sous-bande correspondantes lorsque chaque flux spatial occupe la sous-bande,
    dans lequel le résultat de mesure de qualité de canal comprend également :

    un seuil de réglage, dans lequel le seuil de réglage est une limite supérieure d'une valeur de réglage de puissance d'une sous-bande ; ou
    une intensité maximale de signal reçu RSSI, dans lequel la RSSI maximale est une valeur de puissance d'une antenne du second appareil de communication et présente une RSSI maximale, et la RSSI maximale est utilisée pour déterminer un seuil de réglage,
    dans lequel le résultat de mesure de qualité de canal comprend également une RSSI correspondant à un point d'inflexion de grandeur de vecteur d'erreur EVM du second appareil de communication.

10. Dispositif de communication (600), dans lequel le dispositif de communication supporte la transmission d'une pluralité de flux spatiaux, et le dispositif de communication comprend :

    un émetteur-récepteur (603), configuré pour envoyer des informations d'indication de mesure à un second appareil de communication, et recevoir un résultat de mesure de qualité de canal renvoyé par le second appareil de communication, dans lequel les informations d'indication de mesure indiquent au second appareil de communication de réaliser une mesure de qualité de canal sur un canal entre le dispositif de communication et le second appareil de communication, et chacun de la pluralité de flux spatiaux occupe une pluralité de sous-bandes sur le canal ; et le résultat de mesure de qualité de canal comprend des informations de mesure de sous-bande de chaque sous-bande sur le canal ; et
    un processeur (602), couplé à l'émetteur-récepteur et configuré pour réaliser sélectivement, sur la base des informations de mesure de sous-bande, un remplissage en eau de puissance sur des sous-bandes occupées par la pluralité de flux spatiaux,
    dans lequel les informations de mesure de sous-bande de chaque sous-bande comprennent des informations de

**EP 4 243 515 B1**

rapport signal sur bruit moyen de sous-bande correspondantes lorsque chaque flux spatial occupe la sous-bande ; et la réalisation sélective,
sur la base des informations de mesure de sous-bande, d'un remplissage en eau de puissance sur des sous-bandes occupées par la pluralité de flux spatiaux comprend :

la réalisation sélective, sur la base des informations de rapport signal sur bruit moyen de sous-bande, d'un remplissage en eau de puissance sur les sous-bandes occupées par la pluralité de flux spatiaux,
dans lequel la réalisation sélective, sur la base des informations de rapport signal sur bruit moyen de sous-bande, d'un remplissage en eau de puissance sur les sous-bandes occupées par la pluralité de flux spatiaux comprend :

la détermination, sur la base des informations de rapport signal sur bruit moyen de sous-bande, d'une valeur de réglage de puissance de chaque sous-bande occupée par chaque flux spatial ;
pour chaque sous-bande occupée par chaque flux spatial, lorsque la valeur de réglage de puissance de la sous-bande satisfait une condition de réglage prédéfinie, la sélection de la sous-bande comme sous-bande cible sur laquelle le remplissage en eau de puissance doit être réalisé dans le flux spatial ; et
la réalisation d'un remplissage en eau de puissance sur la sous-bande cible sur la base d'une valeur de réglage de puissance cible de la sous-bande cible,
une valeur de réglage de puissance cible de chaque sous-bande cible est inférieure ou égale à un seuil de réglage, et le seuil de réglage est une limite supérieure d'une valeur de réglage de puissance d'une sous-bande ; et
le résultat de mesure de qualité de canal comprend également :

le seuil de réglage ; ou
une intensité maximale de signal reçu RSSI, dans lequel la RSSI maximale est une valeur de puissance d'une antenne du second appareil de communication et présente une RSSI maximale, et le seuil de réglage est une différence entre la RSSI maximale et un seuil RSSI prédéfini,
dans lequel le seuil RSSI est une RSSI correspondant à un point d'inflexion EVM de grandeur vectorielle d'erreur du second appareil de communication, dans lequel
la RSSI correspondant au point d'inflexion EVM du second appareil de communication est obtenue par le premier appareil de communication par estimation ; ou le résultat de mesure de qualité de canal comprend également la RSSI correspondant au point d'inflexion EVM du second appareil de communication.

11. Support de stockage lisible par ordinateur, dans lequel le support de stockage lisible par ordinateur stocke un programme informatique ; et lorsque le programme informatique est exécuté sur un ordinateur, l'ordinateur est activé pour réaliser le procédé selon l'une quelconque des revendications 1 à 8 ou le procédé selon la revendication 9 ou 10.

12. Produit de programme informatique, dans lequel lorsque le produit de programme informatique est exécuté sur un ordinateur, l'ordinateur est activé pour réaliser le procédé selon l'une quelconque des revendications 1 à 8 ou le procédé selon la revendication 9 ou 10.

FIG. 1

First communication apparatus

Second communication apparatus

S210: Send measurement indication information, to indicate to perform channel quality measurement on a channel between the first communication apparatus and the second communication apparatus

S220: Feed back a channel quality measurement result, where the channel quality measurement result includes subband measurement information of each subband on the channel

S230: Selectively perform, based on the subband measurement information, power water filling on subbands occupied by a plurality of spatial streams

FIG. 2

TxBF transmit end

| NDPA | NDP |

Frame interval

Frame interval

Channel quality measurement result

TxBF receive end

FIG. 3

| L-STF | L-LTF | L-SIG | RL-SIG | HE-SIG-A | HE-STF | HE-LTF | PE |
|-------|-------|-------|--------|----------|--------|--------|-----|

FIG. 4

500

Processing unit — 501

Transceiver unit — 502

FIG. 5

600

603 Transceiver

602 Processor

604

601 Memory

FIG. 6

**EP 4 243 515 B1**

## REFERENCES CITED IN THE DESCRIPTION

**Patent documents cited in the description**

- US 2004042439 A1